(19) **Europäisches Patentamt**
**European Patent Office**
**Office européen des brevets**

(11) **EP 4 529 065 A1**

(12) **EUROPEAN PATENT APPLICATION**
published in accordance with Art. 153(4) EPC

(43) Date of publication:
**26.03.2025 Bulletin 2025/13**

(21) Application number: **23818886.6**

(22) Date of filing: **11.05.2023**

(51) International Patent Classification (IPC):
**H04L 5/00** (2006.01)

(52) Cooperative Patent Classification (CPC):
**H04B 1/7163; H04L 5/00; H04W 4/02**

(86) International application number:
**PCT/CN2023/093597**

(87) International publication number:
**WO 2023/236721 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.06.2022  CN 202210637088
05.07.2022  CN 202210783842**

(71) Applicant: **Huawei Technologies Co., Ltd.
Shenzhen, Guangdong 518129 (CN)**

(72) Inventors:
• **WU, Kuan**
**Shenzhen, Guangdong 518129 (CN)**
• **JIA, Jia**
**Shenzhen, Guangdong 518129 (CN)**
• **QIAN, Bin**
**Shenzhen, Guangdong 518129 (CN)**
• **YANG, Xun**
**Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **METHOD AND APPARATUS FOR TRANSMITTING SIGNALING**

(57)    This application is applied to an ultra-wideband UWB-based wireless personal area network system, including 802.15 series protocols, for example, the 802.15.4a protocol, the 802.15.4z protocol, or the 802.15.4ab protocol, a wireless local area network system that can support 802.11 series protocols such as a next-generation Wi-Fi protocol of IEEE 802.11ax, for example, 802.11be, Wi-Fi 7, or EHT, and for another example, a next generation protocol of 802.11be, and Wi-Fi 8; a sensing sensing system; or the like. This application provides a signaling transmission method, including: receiving a UWB test signal, determining indication information of a number of fragment signals of a UWB measurement signal based on the UWB test signal, and sending the indication information. The number of fragment signals of the UWB measurement signal is determined based on the UWB test signal. This reduces a probability of incorrectly configuring the number of fragment signals.

FIG. 6

**Description**

This application claims priorities to Chinese Patent Application No. 202210637088.2, filed with the China National Intellectual Property Administration on June 7, 2022 and entitled "SIGNALING TRANSMISSION METHOD AND APPARATUS", and to Chinese Patent Application No. 202210783842.3, filed with the China National Intellectual Property Administration on July 5, 2022 and entitled "SIGNALING TRANSMISSION METHOD AND APPARATUS", both of which are incorporated herein by reference in their entireties.

**TECHNICAL FIELD**

Embodiments of this application relate to the communication field, and more specifically, to a signaling transmission method and apparatus.

**BACKGROUND**

An ultra-wideband (ultra-wideband, UWB) technology is a wireless communication (ranging, sensing, or the like) technology that uses a nanosecond-level non-sinusoidal narrow impulse signal. For its narrow impulse and extremely low spectral density of radiation, a UWB system has advantages of a strong multipath resolution capability, low power consumption, high confidentiality, and the like.

In a ranging or sensing scenario, precision of a measurement or sensing result is highly related to signal bandwidth. Larger signal bandwidth indicates higher precision of a result obtained through sensing or ranging. Therefore, it may be considered that a reference signal for ranging or sensing is received and sent by using the UWB system, and another reference signal and/or data are/is transmitted based on a narrowband protocol. This processing manner may be understood as narrowband protocol-assisted UWB ranging or sensing.

In a current narrowband protocol-assisted UWB ranging method, in a ranging control phase, a responder roughly estimates, based on power strength of a narrowband signal received from an initiator, a number of fragment signals of a UWB ranging signal that needs to be used in a ranging phase in a current UWB ranging round. This may mislead the initiator in parameter configuration in the ranging phase, and reduce system efficiency. Therefore, how to improve performance of a narrowband protocol-assisted UWB ranging or sensing method becomes an urgent problem to be resolved.

**SUMMARY**

Embodiments of this application provide a signaling transmission method. In a narrowband protocol-assisted UWB data measurement scenario, a number of blocks of a UWB ranging signal is determined based on a UWB test signal, to reduce a probability of incorrectly configuring the number of blocks of the UWB ranging signal.

According to a first aspect, a signaling transmission method is provided. The method may be performed by a receive end device, or may be performed by a component (for example, a chip or a circuit) of the receive end device. This is not limited. For ease of description, an example in which the method is performed by the receive end device is used for description below. It should be understood that the receive end device may be a measurement responder device, or may be a measurement initiator device.

The signaling transmission method includes: The receive end device receives a first ultra-wideband UWB signal from a transmit end device; and the receive end device sends first indication information to the transmit end device, where the first indication information indicates a first number of fragment signals of a second UWB signal; and the first indication information is determined based on the first UWB signal.

Based on the technical solution, the receive end device determines, based on the received first UWB signal, the number of fragment signals of the to-be-transmitted second UWB signal, instead of determining a number of fragment signals of a UWB signal based on a narrowband signal. Compared with a solution of estimating the number of fragment signals of the UWB signal based on the narrowband signal, this technical solution has more accurate number, reduces a probability of incorrectly configuring the number of fragment signals of the UWB signal, and avoids or reduces a probability of system efficiency reduction.

In addition, if the number of fragment signals of the UWB signal is incorrectly configured, on-time periods of receivers of the receive end/transmit end device may be improperly configured. However, this technical solution can avoid or reduce a probability that the on-time periods of the receivers of the receive end/transmit end device are improperly configured, further avoid or reduce a probability that power is consumed excessively fast because the receive end/transmit end device cannot effectively sleep, and further avoid or reduce a probability that work duration of the receive end/transmit end device is reduced.

With reference to the first aspect, in some implementations of the first aspect, the first indication information is carried in a first information element, the first information element further includes a first address size specifier field and/or a first address field, the first address size specifier field indicates an address type of a device that receives the first information element, and the first address field indicates an address of the device that receives the first information element.

Based on the technical solution, the first indication information may be carried in the first information element. In addition, to enable the device to receive the first information element, the first information element may include address-related information of the device, to increase a probability of successfully transmitting the first information element.

With reference to the first aspect, in some implementations of the first aspect, the method further includes: The receive end device determines, based on quality of the first UWB signal, a confidence level corresponding to the first UWB signal; and the receive end device determines the first indication information based on the confidence level and a mapping relationship, where the mapping relationship is a mapping relationship between the confidence level and the first number.

Alternatively,
with reference to the first aspect, in some implementations of the first aspect, the first indication information and a confidence level corresponding to the first UWB signal meet a mapping relationship, and the confidence level corresponding to the first UWB signal is determined based on quality of the first UWB signal.

With reference to the first aspect, in some implementations of the first aspect, the method further includes: The receive end device receives first configuration information from the transmit end device, where the first configuration information indicates a configuration of the first UWB signal; and/or the receive end device receives second configuration information from the transmit end device, where the second configuration information indicates a configuration of the second UWB signal.

Based on the technical solution, the transmit end device may implement the related configuration of the UWB signal based on the configuration information, so that the receive end device can successfully receive the UWB signal.

With reference to the first aspect, in some implementations of the first aspect, the method further includes: The receive end device receives second indication information from the transmit end device, where the second indication information indicates a second number of fragment signals of the second UWB signal, and the second indication information is determined based on the first indication information.

Based on the technical solution, the transmit end device and the receive end device may negotiate an appropriate number of fragment signals of the UWB signal. This improves accuracy of the solution.

With reference to the first aspect, in some implementations of the first aspect, the method further includes: The receive end device sends a fifth UWB signal to the transmit end device; and the receive end device receives second indication information from the transmit end device, where the second indication information indicates a fourth number of fragment signals of the second UWB signal; and the fourth number of fragment signals of the second UWB signal is determined based on the first indication information and/or the fifth UWB signal.

Based on the technical solution, the transmit end device and the receive end device may exchange UWB signals of respective UWB receivers, so that the transmit end device determines, by comprehensively considering quality of the received UWB signals of the respective UWB receivers of the transmit end device and the receive end device, the number of block signals of the second UWB signal. This improves accuracy of the solution.

With reference to the first aspect, in some implementations of the first aspect, the fifth UWB signal is used to determine a fifth number of fragment signals of the second UWB signal, and the fourth number of fragment signals of the second UWB signal is determined based on the first number of fragment signals of the second UWB signal and the fifth number of fragment signals of the second UWB signal.

With reference to the first aspect, in some implementations of the first aspect, the second indication information is carried in a second information element, the second information element further includes a second address size specifier field and/or a second address field, the second address size specifier field indicates an address type of a device that receives the second information element, and the second address field indicates an address of the device that receives the second information element.

Based on the technical solution, the second indication information may be carried in the second information element. In addition, to enable the device to receive the second information element, the second information element may include address-related information of the device, to increase a probability of successfully transmitting the second information element.

With reference to the first aspect, in some implementations of the first aspect, the second indication information is carried in a notification message, and the notification message is used to schedule and indicate a sending sequence of the fragment signals of the second UWB signal.

Based on the technical solution, the message carrying the second indication information may be used to schedule the sending sequence of the fragment signals.

With reference to the first aspect, in some implementations of the first aspect, the method further includes: The receive end device receives a poll signal from the transmit end device, or the receive end device sends a poll signal to the transmit end device, where the poll signal indicates a sending sequence of a UWB signal and a narrowband signal that are transmitted in a measurement control phase.

Based on the technical solution, the poll signal transmitted between the receive end device and the transmit end device may indicate the sending sequence of the UWB signal and the narrowband signal that are transmitted in the measurement control phase, to support transmission of the UWB signal and the narrowband signal in the measurement control phase. According to a second aspect, a signaling transmission method is provided. The method may be performed by a transmit end device, or may be performed by a component (for example, a chip or a circuit) of the transmit end device. This is not limited. For ease of description, an example in which the method is performed by the transmit end device is used for description below.

It should be understood that, when the receive end device in the first aspect is a measurement responder device, the transmit end device is a measurement initiator device; or when the receive end device in the first aspect is a measurement initiator device, the transmit end device is a measurement responder device.

The signaling transmission method includes: The transmit end device sends a first UWB signal to a receive end device, where the first UWB signal is used to determine first indication information, and the first indication information indicates a first number of fragment signals of a second UWB signal; and the transmit end device receives the first indication information from the receive end device.

With reference to the second aspect, in some implementations of the second aspect, the first indication information is carried in a first information element, the first information element further includes a first address size specifier field and a first address field, the first address size specifier field indicates an address type of a device that receives the first information element, and the first address field indicates an address of the device that receives the first information element.

With reference to the second aspect, in some implementations of the second aspect, the method further includes: The transmit end device sends first configuration information to the receive end device, where the first configuration information indicates a configuration of the first UWB signal; and/or the transmit end device sends second configuration information to the receive end device, where the second configuration information indicates a configuration of the second UWB signal.

With reference to the second aspect, in some implementations of the second aspect, the method further includes: The transmit end device determines second indication information based on the first indication information, where the second indication information indicates a second number of fragment signals of the second UWB signal; and the transmit end device sends the second indication information to the receive end device.

With reference to the second aspect, in some implementations of the second aspect, the method further includes: The transmit end device receives a fifth UWB signal from the receive end device; the transmit end device determines a fourth number of fragment signals of the second UWB signal based on the first indication information and/or the fifth UWB signal; and the transmit end device sends second indication information to the receive end device, where the second indication information indicates a fourth number of fragment signals of the second UWB signal.

With reference to the second aspect, in some implementations of the second aspect, the method further includes: The transmit end device determines a fifth number of fragment signals of the second UWB signal based on the fifth UWB signal; and the determining a fourth number of fragment signals of the second UWB signal based on the first indication information and/or the fifth UWB signal includes: determining the fourth number of fragment signals of the second UWB signal based on the first number of fragment signals of the second UWB signal and the fifth number of fragment signals of the second UWB signal.

With reference to the second aspect, in some implementations of the second aspect, the second indication information is carried in a notification message, and the notification message is used to schedule and indicate a sending sequence of the fragment signals of the second UWB signal. With reference to the second aspect, in some implementations of the second aspect, the second indication information is carried in a second information element, the second information element further includes a second address size specifier field and/or a second address field, the second address size specifier field indicates an address type of a device that receives the second information element, and the second address field indicates an address of the device that receives the second information element.

With reference to the second aspect, in some implementations of the second aspect, the method further includes: The transmit end device receives a poll signal from the receive end device, or the transmit end device sends a poll signal to the receive end device, where the poll signal indicates a sending sequence of a UWB signal and a narrowband signal that are transmitted in a measurement control phase.

For beneficial effect of the method shown in the second aspect and the possible designs of the second aspect, refer to the beneficial effect in the first aspect and the possible designs of the first aspect.

According to a third aspect, a signaling transmission apparatus is provided. The signaling transmission apparatus is configured to perform the method provided in the first aspect.

The signaling transmission apparatus includes: a receiving unit, configured to receive a first ultra-wideband UWB signal from a transmit end device; and a sending unit, configured to send first indication information to the transmit end device, where the first indication information indicates a first number of fragment signals of a second UWB signal; and the first indication information is determined based on the first UWB signal.

With reference to the third aspect, in some implementations of the third aspect, the first indication information is carried in a first information element, the first information element further includes a first address size specifier field and/or a first address field, the first address size specifier field indicates an address type of a device that receives the first information element, and the first address field indicates an address of the device that receives the first information element.

With reference to the third aspect, in some implementations of the third aspect, the apparatus further includes: a processing unit, configured to determine, based on quality of the first UWB signal, a confidence level corresponding to the first UWB signal; and the processing unit is further configured to determine the first indication information based on the confidence level and a mapping relationship, where the mapping relationship is a mapping relationship between the confidence level and the first number.

Alternatively,
with reference to the third aspect, in some implementations of the third aspect, the first indication information and a confidence level corresponding to the first UWB signal meet a mapping relationship, and the confidence level corresponding to the first UWB signal is determined based on quality of the first UWB signal.

With reference to the third aspect, in some implementations of the third aspect, the receiving unit is further configured to receive first configuration information from the transmit end device, where the first configuration information indicates a configuration of the first UWB signal; and/or the receiving unit is further configured to receive second configuration information from the transmit end device, where the second configuration information indicates a configuration of the second UWB signal.

With reference to the third aspect, in some implementations of the third aspect, the receiving unit is further configured to receive second indication information from the transmit end device, where the second indication information indicates a second number of fragment signals of the second UWB signal, and the second indication information is determined based on the first indication information.

With reference to the third aspect, in some implementations of the third aspect, the sending unit is further configured to send a fifth UWB signal to the transmit end device; and the receiving unit is further configured to receive second indication information from the transmit end device, where the second indication information indicates a fourth number of fragment signals of the second UWB signal; and the fourth number of fragment signals of the second UWB signal is determined based on the first indication information and/or the fifth UWB signal.

With reference to the third aspect, in some implementations of the third aspect, the fifth UWB signal is used to determine a fifth number of fragment signals of the second UWB signal, and the fourth number of fragment signals of the second UWB signal is determined based on the first number of fragment signals of the second UWB signal and the fifth number of fragment signals of the second UWB signal.

With reference to the third aspect, in some implementations of the third aspect, the second indication information is carried in a second information element, the second information element further includes a second address size specifier field and/or a second address field, the second address size specifier field indicates an address type of a device that receives the second information element, and the second address field indicates an address of the device that receives the second information element.

With reference to the third aspect, in some implementations of the third aspect, the second indication information is carried in a notification message, and the notification message is used to schedule and indicate a sending sequence of the fragment signals of the second UWB signal.

With reference to the third aspect, in some implementations of the third aspect, the sending unit is further configured to send a poll signal to the transmit end device, or the receiving unit is further configured to receive a poll signal from the transmit end device, where the poll signal indicates a sending sequence of a UWB signal and a narrowband signal that are transmitted in a measurement control phase.

For beneficial effect of the apparatus shown in the third aspect and the possible designs of the third aspect, refer to the beneficial effect in the first aspect and the possible designs of the first aspect.

According to a fourth aspect, a signaling transmission apparatus is provided. The signaling transmission apparatus is configured to perform the method provided in the second aspect.

The signaling transmission apparatus includes: a sending unit, configured to send a first UWB signal to a receive end device, where the first UWB signal is used to determine first indication information, and the first indication information indicates a first number of fragment signals of a second UWB signal; and a receiving unit, configured to receive the first indication information from the receive end device.

With reference to the fourth aspect, in some implementations of the fourth aspect, the first indication information is carried in a first information element, the first information element further includes a first address size specifier field and a first address field, the first address size specifier field indicates an address type of a device that receives the first information element, and the first address field indicates an address of the device that receives the first information element.

With reference to the fourth aspect, in some implementations of the fourth aspect, the sending unit is further configured to send first configuration information to the receive end device, where the first configuration information indicates a configuration of the first UWB signal; and/or the sending unit is further configured to send second configuration information to the receive end device, where the second configuration information indicates a configuration of the second UWB signal.

With reference to the fourth aspect, in some implementations of the fourth aspect, the apparatus further includes: a processing unit, configured to determine second indication information based on the first indication information, where the second indication information indicates a second number of fragment signals of the second UWB signal; and the sending unit is further configured to send the second indication information to the receive end device.

With reference to the fourth aspect, in some implementations of the fourth aspect, the sending unit is further configured to send a fifth UWB signal to the receive end device; the apparatus further includes the processing unit, configured to determine a fourth number of fragment signals of the second UWB signal based on the first indication information and/or the fifth UWB signal; and the sending unit is further configured to send second indication information to the receive end device, where the second indication information indicates the fourth number of fragment signals of the second UWB signal.

With reference to the fourth aspect, in some implementations of the fourth aspect, the processing unit is further configured to determine a fifth number of fragment signals of the second UWB signal based on the fifth UWB signal; and that the processing unit determines the fourth number of fragment signals of the second UWB signal based on the first indication information and/or the fifth UWB signal includes: The processing unit determines the fourth number of fragment signals of the second UWB signal based on the first number of fragment signals of the second UWB signal and the fifth number of fragment signals of the second UWB signal.

With reference to the fourth aspect, in some implementations of the fourth aspect, the second indication information is carried in a second information element, the second information element further includes a second address size specifier field and/or a second address field, the second address size specifier field indicates an address type of a device that receives the second information element, and the second address field indicates an address of the device that receives the second information element.

With reference to the fourth aspect, in some implementations of the fourth aspect, the second indication information is carried in a notification message, and the notification message is used to schedule and indicate a sending sequence of the fragment signals of the second UWB signal.

With reference to the fourth aspect, in some implementations of the fourth aspect, the sending unit is further configured to send a poll signal to the transmit end device, or the receiving unit is further configured to receive a poll signal from the transmit end device, where the poll signal indicates a sending sequence of a UWB signal and a narrowband signal that are transmitted in a measurement control phase.

For beneficial effect of the apparatus shown in the fourth aspect and the possible designs of the fourth aspect, refer to the beneficial effect in the second aspect and the possible designs of the second aspect.

According to a fifth aspect, a signaling transmission method is provided. The method may be performed by a transmit end device, or may be performed by a component (for example, a chip or a circuit) of the transmit end device. This is not limited. For ease of description, an example in which the method is performed by the transmit end device is used for description below.

The signaling transmission method includes: The transmit end device sends third indication information to a control device, where the third indication information indicates a third number of fragment signals of a third UWB signal; and the transmit end device receives first information from the control device, where the first information indicates whether it is agreed to change a number of fragment signals of the third UWB signal to the third number; and the third indication information is determined based on at least one fragment signal of a fourth UWB signal.

Based on the technical solution, when determining that the number of fragment signals of the third UWB signal to be transmitted in a UWB system changes, the transmit end device may notify, by using the third indication information, the control device of the change, and the control device determines whether to change the number of fragment signals of the third UWB signal. The number of fragment signals of the third UWB signal is determined based on the at least one fragment signal included in the fourth UWB signal. Compared with a solution of estimating a number of fragment signals of a UWB signal based on a narrowband signal, this technical solution has more accurate number, reduces a probability of incorrectly configuring a number of fragment signals of a UWB signal, and avoids or reduces a probability of system efficiency reduction. In addition, this technical solution can avoid or reduce a probability that on-time periods of receivers of a receive end/transmit end device are improperly configured, further avoid or reduce a probability that power is consumed excessively fast because the receive end/transmit end device cannot effectively sleep, and further avoid or reduce a probability that work duration of the receive end/transmit end device is reduced.

With reference to the fifth aspect, in some implementations of the fifth aspect, the method further includes: The transmit end device sends second information to the control device, where the second information indicates that the number of fragment signals of the third UWB signal is changed.

Based on the technical solution, the transmit end device may indicate, by using trigger information, the control device to change the number of fragment signals of the third UWB signal, and current signaling between the transmit end device and the control device is still used. This improves backward compatibility of the solution.

With reference to the fifth aspect, in some implementations of the fifth aspect, the third indication information is carried in a third information element, the third information element further includes a third address size specifier field and/or a third address field, the third address size specifier field indicates an address type of a device that receives the third information element, and the third address field indicates an address of the device that receives the third information element.

Based on the technical solution, the third indication information may be carried in the third information element. In addition, to enable the device to receive the third information element, the third information element may include address-related information of the device, to increase a probability of successfully transmitting the third information element.

With reference to the fifth aspect, in some implementations of the fifth aspect, the first information indicates to agree to change the number of fragment signals of the third UWB signal to the third number, and the method further includes: The transmit end device receives fourth indication information from the control device, where the fourth indication information indicates the third number of fragment signals of the third UWB signal.

Based on the technical solution, when the control device agrees to change the number of fragment signals of the UWB signal, the control device may notify, by using the fourth indication information, that third UWB signal may be transmitted based on the third number. This gives the control device a capability of finally determining the number of fragment signals of the third UWB signal.

With reference to the fifth aspect, in some implementations of the fifth aspect, the fourth indication information is carried in a fourth information element, the fourth information element further includes a fourth address size specifier field and/or a fourth address field, the fourth address size specifier field indicates an address type of a device that receives the fourth information element, and the fourth address field indicates an address of the device that receives the fourth information element.

Based on the technical solution, the fourth indication information may be carried in the fourth information element. In addition, to enable the device to receive the fourth information element, the fourth information element may include address-related information of the device, to increase a probability of successfully transmitting the fourth information element.

With reference to the fifth aspect, in some implementations of the fifth aspect, that the transmit end device sends third indication information to a control device includes: The transmit end device sends the third indication information to the control device in a measurement report phase of a first round, where the third UWB signal includes a UWB signal transmitted in a measurement phase of a second round, and the second round is a measurement round after the first round.

That the transmit end device receives fourth indication information from the control device includes: The transmit end device receives the fourth indication information from the control device in the measurement report phase of the first round; or the transmit end device receives the fourth indication information from the control device before the measurement phase of the second round.

With reference to the fifth aspect, in some implementations of the fifth aspect, that the transmit end device sends third indication information to a control device includes: The transmit end device sends the third indication information to the control device at a first moment in a measurement phase of a first round, where the third UWB signal includes a UWB signal transmitted in a measurement phase of a second round and/or a UWB signal transmitted after a second moment in the measurement phase of the first round, and the second moment is later than the first moment.

That the transmit end device receives fourth indication information from the control device includes: The transmit end device receives the fourth indication information from the control device before the measurement phase of the second round; or the transmit end device receives the fourth indication information from the control device at the second moment in the measurement phase of the first round.

Based on the technical solution, the transmit end device may send the third indication information in different phases of a measurement process to indicate the third number of fragment signals of the third UWB signal, and change the number of fragment signals of the UWB signal transmitted in different measurement rounds. This improves flexibility of the solution.

According to a sixth aspect, a signaling transmission method is provided. The method may be performed by a control device, or may be performed by a component (for example, a chip or a circuit) of the control device. This is not limited. For ease of description, an example in which the method is performed by the control device is used for description below.

The signaling transmission method includes: The control device receives third indication information from a transmit end device, where the third indication information indicates a third number of fragment signals of a third UWB signal; and the control device sends first information to the transmit end device, where the first information indicates whether it is agreed to change a number of fragment signals of the third UWB signal to the third number; and the third indication information is determined based on at least one fragment signal of a fourth UWB signal.

With reference to the sixth aspect, in some implementations of the sixth aspect, the method further includes: The control device receives second information from the transmit end device, where the second information indicates that the number of fragment signals of the third UWB signal is changed.

With reference to the sixth aspect, in some implementations of the sixth aspect, the third indication information is carried in a third information element, the third information element further includes a third address size specifier field and/or a third address field, the third address size specifier field indicates an address type of a device that receives the third information element, and the third address field indicates an address of the device that receives the third information element.

With reference to the sixth aspect, in some implementations of the sixth aspect, the first information indicates to agree to change the number of fragment signals of the third UWB signal to the third number, and the method further includes: The control device sends fourth indication information to the transmit end device and a receive end device, where the fourth indication information indicates the third number of fragment signals of the third UWB signal.

With reference to the sixth aspect, in some implementations of the sixth aspect, the fourth indication information is carried in a fourth information element, the fourth information element further includes a fourth address size specifier field and/or a fourth address field, the fourth address size specifier field indicates an address type of a device that receives the fourth information element, and the fourth address field indicates an address of the device that receives the fourth information element.

With reference to the sixth aspect, in some implementations of the sixth aspect, that the control device receives third indication information from a transmit end device includes: The control device receives the third indication information from the transmit end device in a measurement report phase of a first round, where the third UWB signal includes a UWB signal transmitted in a measurement phase of a second round, and the second round is a measurement round after the first round.

That the control device sends fourth indication information to the transmit end device and a receive end device includes: The control device sends the fourth indication information to the transmit end device and the receive end device in the measurement report phase of the first round; or the control device sends the fourth indication information to the transmit end device and the receive end device before the measurement phase of the second round.

With reference to the sixth aspect, in some implementations of the sixth aspect, that the control device receives third indication information from a transmit end device includes: The control device receives the third indication information from the transmit end device at a first moment in a measurement phase of a first round, where the third UWB signal includes a UWB signal transmitted in a measurement phase of a second round and/or a UWB signal transmitted after a second moment in the measurement phase of the first round, and the second moment is later than the first moment.

That the control device sends fourth indication information to the transmit end device and a receive end device includes: The control device sends the fourth indication information to the transmit end device and the receive end device before the measurement phase of the second round; or the control device sends the fourth indication information to the transmit end device and the receive end device at the second moment in the measurement phase of the first round.

For beneficial effect of the method shown in the sixth aspect and the possible designs of the sixth aspect, refer to the beneficial effect in the fifth aspect and the possible designs of the fifth aspect.

According to a seventh aspect, a signaling transmission method is provided. The method may be performed by a receive end device, or may be performed by a component (for example, a chip or a circuit) of the receive end device. This is not limited. For ease of description, an example in which the method is performed by the receive end device is used for description below.

It should be understood that, when the transmit end device in the fifth aspect is a measurement initiator device, the receive end device is a measurement responder device; or when the transmit end device in the fifth aspect is a measurement responder device, the receive end device is a measurement initiator device.

The signaling transmission method includes: The receive end device receives fourth indication information from a control device, where the fourth indication information indicates a third number of fragment signals of a third UWB signal; and the receive end device transmits the third UWB signal based on the third number.

With reference to the seventh aspect, in some implementations of the seventh aspect, the fourth indication information is carried in a fourth information element, the fourth information element further includes a fourth address size specifier field and/or a fourth address field, the fourth address size specifier field indicates an address type of a device that receives the fourth information element, and the fourth address field indicates an address of the device that receives the fourth information element.

With reference to the seventh aspect, in some implementations of the seventh aspect, that the receive end device receives fourth indication information from a control device includes: The receive end device receives the fourth indication information from the control device in a measurement report phase of a first round, where the third UWB signal includes a UWB signal transmitted in a measurement phase of a second round, and the second round is a measurement round after the first round.

With reference to the seventh aspect, in some implementations of the seventh aspect, that the receive end device receives fourth indication information from a control device includes: The receive end device receives the fourth indication information from the control device at a second moment in a measurement phase of a first round; or the receive end device receives the fourth indication information from the control device before a measurement phase of a second round, where the third UWB signal includes a UWB signal transmitted in the measurement phase of the second round and/or a UWB signal transmitted after the second moment in the measurement phase of the first round.

For beneficial effect of the method shown in the seventh aspect and the possible designs of the seventh aspect, refer to the beneficial effect in the fifth aspect and the possible designs of the fifth aspect.

According to an eighth aspect, a signaling transmission apparatus is provided. The signaling transmission apparatus is configured to perform the method provided in the fifth aspect.

The signaling transmission apparatus includes: a sending unit, configured to send third indication information to a control device, where the third indication information indicates a third number of fragment signals of a third UWB signal; and a receiving unit, configured to receive first information from the control device, where the first information indicates whether it is agreed to change a number of fragment signals of the third UWB signal to the third number; and the third indication information is determined based on at least one fragment signal of a fourth UWB signal.

With reference to the eighth aspect, in some implementations of the eighth aspect, the sending unit is further configured to send second information to the control device, where the second information indicates that the number of fragment signals of the third UWB signal is changed.

With reference to the eighth aspect, in some implementations of the eighth aspect, the third indication information is carried in a third information element, the third information element further includes a third address size specifier field and/or a third address field, the third address size specifier field indicates an address type of a device that receives the third information element, and the third address field indicates an address of the device that receives the third information element.

With reference to the eighth aspect, in some implementations of the eighth aspect, the first information indicates to agree to change the number of fragment signals of the third UWB signal to the third number, and the receiving unit is further configured to receive fourth indication information from the control device, where the fourth indication information indicates the third number of fragment signals of the third UWB signal.

With reference to the eighth aspect, in some implementations of the eighth aspect, the fourth indication information is carried in a fourth information element, the fourth information element further includes a fourth address size specifier field and/or a fourth address field, the fourth address size specifier field indicates an address type of a device that receives the fourth information element, and the fourth address field indicates an address of the device that receives the fourth information element.

With reference to the eighth aspect, in some implementations of the eighth aspect, that the sending unit sends the third indication information to the control device includes: The sending unit sends the third indication information to the control device in a measurement report phase of a first round, where the third UWB signal includes a UWB signal transmitted in a measurement phase of a second round, and the second round is a measurement round after the first round.

That the receiving unit receives the fourth indication information from the control device includes: The receiving unit receives the fourth indication information from the control device in the measurement report phase of the first round; or the receiving unit receives the fourth indication information from the control device before the measurement phase of the second round.

With reference to the eighth aspect, in some implementations of the eighth aspect, that the sending unit sends the third indication information to the control device includes: The sending unit sends the third indication information to the control device at a first moment in a measurement phase of a first round, where the third UWB signal includes a UWB signal transmitted in a measurement phase of a second round and/or a UWB signal transmitted after a second moment in the measurement phase of the first round, and the second moment is later than the first moment.

That the receiving unit receives the fourth indication information from the control device includes: The receiving unit receives the fourth indication information from the control device before the measurement phase of the second round; or the receiving unit receives the fourth indication information from the control device at the second moment in the measurement phase of the first round.

For beneficial effect of the apparatus shown in the eighth aspect and the possible designs of the eighth aspect, refer to the beneficial effect in the fifth aspect and the possible designs of the fifth aspect.

According to a ninth aspect, a signaling transmission apparatus is provided. The signaling transmission apparatus is configured to perform the method provided in the sixth aspect.

The signaling transmission apparatus includes: a receiving unit, configured to receive third indication information from a transmit end device, where the third indication information indicates a third number of fragment signals of a third UWB signal; and a sending unit, configured to send first information to the transmit end device, where the first information indicates whether it is agreed to change a number of fragment signals of the third UWB signal to the third number; and the third indication information is determined based on at least one fragment signal of a fourth UWB signal.

With reference to the ninth aspect, in some implementations of the ninth aspect, the receiving unit is further configured to receive second information from the transmit end device, where the second information indicates that the number of fragment signals of the third UWB signal is changed.

With reference to the ninth aspect, in some implementations of the ninth aspect, the third indication information is carried in a third information element, the third information element further includes a third address size specifier field and/or a third address field, the third address size specifier field indicates an address type of a device that receives the third information element, and the third address field indicates an address of the device that receives the third information element.

With reference to the ninth aspect, in some implementations of the ninth aspect, the first information indicates to agree to change the number of fragment signals of the third UWB signal to the third number, and the sending unit is further configured to send fourth indication information to the transmit end device and a receive end device, where the fourth indication information indicates the third number of fragment signals of the third UWB signal.

With reference to the ninth aspect, in some implementations of the ninth aspect, the fourth indication information is carried in a fourth information element, the fourth information element further includes a fourth address size specifier field and/or a fourth address field, the fourth address size specifier field indicates an address type of a device that receives the fourth information element, and the fourth address field indicates an address of the device that receives the fourth information element. With reference to the ninth aspect, in some implementations of the ninth aspect, that the receiving unit receives the third indication information from the transmit end device includes: The receiving unit receives the third indication information from the transmit end device in a measurement report phase of a first round, where the third UWB signal includes a UWB signal transmitted in a measurement phase of a second round, and the second round is a measurement round after the first round.

That the sending unit sends the fourth indication information to the transmit end device and the receive end device includes: The sending unit sends the fourth indication information to the transmit end device and the receive end device in the measurement report phase of the first round; or the sending unit sends the fourth indication information to the transmit end device and the receive end device before the measurement phase of the second round.

With reference to the ninth aspect, in some implementations of the ninth aspect, that the receiving unit receives the third indication information from the transmit end device includes: The receiving unit receives the third indication information from the transmit end device at a first moment in a measurement phase of a first round, where the third UWB signal includes a UWB signal transmitted in a measurement phase of a second round and/or a UWB signal transmitted after a second moment in the measurement phase of the first round, and the second moment is later than the first moment.

That the sending unit sends the fourth indication information to the transmit end device and the receive end device includes: The sending unit sends the fourth indication information to the transmit end device and the receive end device before the measurement phase of the second round; or the sending unit sends the fourth indication information to the transmit end device and the receive end device at the second moment in the measurement phase of the first round.

For beneficial effect of the apparatus shown in the ninth aspect and the possible designs of the ninth aspect, refer to the beneficial effect in the sixth aspect and the possible designs of the sixth aspect.

According to a tenth aspect, a signaling transmission apparatus is provided. The signaling transmission apparatus is configured to perform the method provided in the seventh aspect.

The signaling transmission apparatus includes: a receiving unit, configured to receive fourth indication information from a control device, where the fourth indication information indicates a third number of fragment signals of a third UWB signal; and a processing unit configured to transmit the third UWB signal based on the third number.

With reference to the tenth aspect, in some implementations of the tenth aspect, the fourth indication information is carried in a fourth information element, the fourth information element further includes a fourth address size specifier field and/or a fourth address field, the fourth address size specifier field indicates an address type of a device that receives the fourth information element, and the fourth address field indicates an address of the device that receives the fourth information element.

With reference to the tenth aspect, in some implementations of the tenth aspect, that the receiving unit receives the fourth indication information from the control device includes: The receiving unit receives the fourth indication information from the control device in a measurement report phase of a first round, where the third UWB signal includes a UWB signal transmitted in a measurement phase of a second round, and the second round is a measurement round after the first round.

With reference to the tenth aspect, in some implementations of the tenth aspect, that the receiving unit receives the fourth indication information from the control device includes: The receiving unit receives the fourth indication information from the control device at a second moment in a measurement phase of a first round; or the receiving unit receives the fourth indication information from the control device before a measurement phase of a second round, where the third UWB signal includes a UWB signal transmitted in the measurement phase of the second round and/or a UWB signal transmitted after the second moment in the measurement phase of the first round.

For beneficial effect of the apparatus shown in the tenth aspect and the possible designs of the tenth aspect, refer to the beneficial effect in the seventh aspect and the possible designs of the seventh aspect.

According to an eleventh aspect, a communication apparatus is provided. The apparatus is configured to perform the methods provided in the first aspect to the seventh aspect. Specifically, the communication apparatus may include units and/or modules configured to perform the method provided in any one of the foregoing implementations of the first aspect or the seventh aspect, for example, a processing unit and an obtaining unit.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a twelfth aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a thirteenth aspect, a computer-readable storage medium is provided. The computer-readable storage medium stores program code to be executed by a device. The program code is for performing the method provided in any one of the implementations of the first aspect to the seventh aspect.

According to a fourteenth aspect, a computer program product including instructions is provided. When the computer program product runs on a computer, the computer is enabled to perform the method provided in any one of the implementations of the first aspect to the seventh aspect.

According to a fifteenth aspect, a chip is provided. The chip includes a processor and a communication interface. The processor reads, through the communication interface, instructions stored in a storage, to perform the method provided in any one of the implementations of the first aspect to the seventh aspect.

Optionally, in an implementation, the chip further includes the storage. The storage stores a computer program or instructions. The processor is configured to execute the computer program or the instructions stored in the storage. When the computer program or the instructions are executed, the processor is configured to perform the method provided in any one of the implementations of the first aspect to the seventh aspect.

According to a sixteenth aspect, a communication system is provided, and includes the signaling transmission apparatus according to the third aspect and the signaling transmission apparatus according to the fourth aspect, or includes the signaling transmission apparatus according to the eighth aspect, the signaling transmission apparatus according to the ninth aspect, and the signaling transmission apparatus according to the eighteenth aspect.

## BRIEF DESCRIPTION OF DRAWINGS

FIG. 1 is a diagram of two application scenarios according to this application;

FIG. 2 is a diagram of a UWB signal according to an embodiment of this application;

FIG. 3 is a diagram of an architecture of a ranging/positioning system according to an embodiment of this application;

FIG. 4 is a diagram of phases of a UWB ranging round;

FIG. 5 is a diagram of a UWB ranging method;

FIG. 6 is a schematic flowchart of a signaling transmission method according to an embodiment of this application;

FIG. 7(a) to FIG. 7(h) are schematic flowcharts corresponding to specific examples;

FIG. 8 is a schematic flowchart of another signaling transmission method according to an embodiment of this application;

FIG. 9(a) and FIG. 9(b) are schematic flowcharts corresponding to Example 4;

FIG. 10(a) and FIG. 10(b) are schematic flowcharts corresponding to Example 5;

FIG. 11(a) and FIG. 11(b) are schematic flowcharts corresponding to Example 6;

FIG. 12(a) to FIG. 12(d) are schematic flowcharts corresponding to Example 7;

FIG. 12(e) to FIG. 12(g) are diagrams of triggering update of a number of fragment signals of a UWB signal;

FIG. 13 is a block diagram of a signaling transmission apparatus according to an embodiment of this application; and

FIG. 14 is a block diagram of an apparatus according to an embodiment of this application.

## DESCRIPTION OF EMBODIMENTS

The following describes technical solutions of this application with reference to accompanying drawings.

Embodiments of this application are applicable to an ultra-wideband (Ultra-WideBand, UWB) technology-based wireless personal area network (wireless personal area network, WPAN). Currently, a standard for the WPAN is institute of electrical and electronics engineers (institute of electrical and electronics engineers, IEEE) 802.15 series. The WPAN may be used for communication between digital auxiliary devices in a small range, for example, a telephone, a computer, and an auxiliary device, and a working range of the WPAN is usually within 10 m. Technologies that support the wireless personal area network include Bluetooth (Bluetooth), ZigBee (ZigBee), ultra-wideband, an infrared data association (infrared data association, IrDA) connection technology (infrared), a home radio frequency (home radio frequency, HomeRF) technology, and the like. A person skilled in the art easily understands that, various aspects in this application may be extended to another network using various standards or protocols, for example, a wireless local area network (Wireless Local Area Network, WLAN), a high performance radio LAN (High Performance Radio LAN, HIPERLAN) (a wireless standard similar to the IEEE 802.11 standard, mainly used in Europe), a wide area network (WAN), or another network that is currently known or developed in the future. From a perspective of network composition, the WPAN is located at a bottom layer of an entire network architecture and is for a wireless connection between devices in a small range, that is, a point-to-point short-range connection, and may be considered as a short-range wireless communication network. Based on different application scenarios, WPANs are further classified into a high rate (high rate, HR)-WPAN and a low rate (low rate)-WPAN. The HR-WPAN may be used to support various high-rate multimedia applications, including high-quality sound image delivery, multi-megabyte music and image document transmission, and the like. The LR-WPAN may be for common services in daily life.

In the WPAN, devices may be classified into a full-function device (full-function device, FFD) and a reduced-function device (reduced-function device, RFD) based on communication capabilities of the devices. FFD devices can communicate with each other, and the FFD device and the RFD device can communicate with each other. RFD devices cannot directly communicate with each other, and can only communicate with the FFD device, or forward data externally via one FFD device. An FFD device associated with the RFD is referred to as a coordinator (coordinator) of the RFD. The coordinator may also control and associate a plurality of FFDs. The coordinator is also referred to as a control node. There may be a plurality of coordinators in each ad hoc network. The RFD device is mainly for a simple control application, like a light switch and a passive infrared sensor, transmits a small amount of data, and occupies a small number of transmission resources and communication resources. Therefore, costs of the RFD device are low. The coordinator may also be referred to as a personal area network (PAN) coordinator. The PAN coordinator may be understood as a type of a coordinator, and the PAN coordinator is also referred to as a PAN central control node, or the like. An FFD can serve as a PAN coordinator or coordinator, while an RFD cannot serve as a PAN coordinator or coordinator. The PAN coordinator is a main control node of an entire network, and each ad hoc network can have only one PAN coordinator having a member identity management, link information management, and packet forwarding function. Optionally, the device in embodiments of this application may be a device that supports a plurality of WPAN standards such as 802.15.4a, 802.15.4z, and 802.15.4ab or a later version.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, contacts, word processing software, and instant messaging software. In addition, a specific structure of an execution body of a method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that is in the FFD or the RFD and that can invoke and execute a program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to a magnetic storage component (for example, a hard disk, a floppy disk or a magnetic tape), an optical disc (for example, a compact disc (compact disc, CD), a digital versatile disc (digital versatile disc, DVD)), a smart card and a flash storage component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry instructions and/or data.

Alternatively, embodiments of this application are further applicable to a wireless local area network system, like an internet of things (internet of things, IoT) network or vehicle-to-everything (Vehicle to X, V2X). Certainly, embodiments of this application are further applicable to other possible communication systems, for example, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems to which this application is applicable are merely examples for descriptions, and the communication systems to which this application is applicable are not limited thereto. This is uniformly described herein, and details are not described below again.

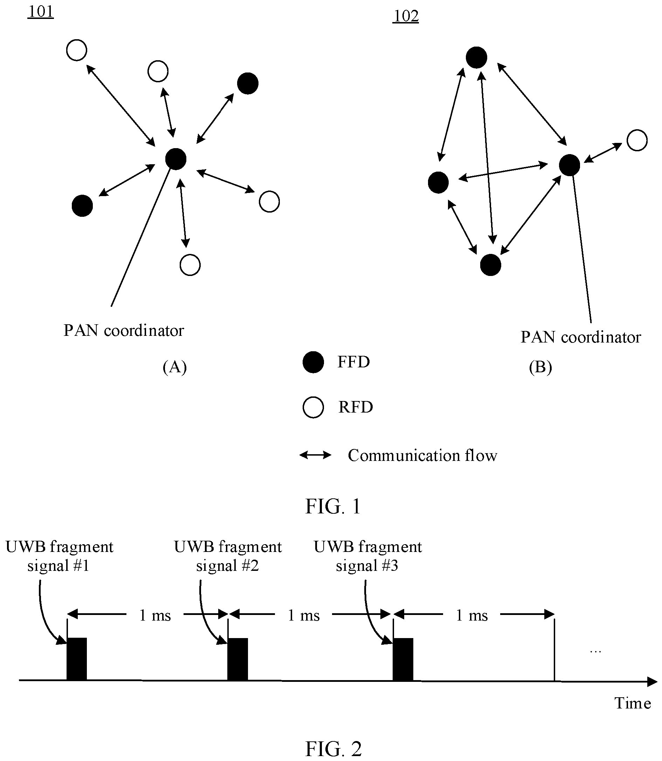

FIG. 1 is a diagram of two application scenarios according to this application. In a system 101 shown in (A) in FIG. 1, a plurality of FFD devices and a plurality of RFD devices form a communication system with a star topology (star topology), where one FFD is a PAN controller. In the communication system with the star topology, the PAN controller performs data transmission with one or more other devices, that is, a one-to-many or many-to-one data transmission architecture may be established between a plurality of devices. In a system 102 shown in (B) in FIG. 1, a plurality of FFD devices and one RFD device form a communication system with a peer to peer topology (peer to peer topology) or a mesh topology, where one FFD is a PAN controller. In the communication system with the peer to peer topology, a many-to-many data transmission architecture may be established between a plurality of different devices.

It should be understood that (A) in FIG. 1 and (B) in FIG. 1 are merely simplified diagrams for ease of understanding, and do not constitute a limitation on an application scenario of this application. For example, the system 101 and/or the system 102 may further include another FFD and/or another RFD. For another example, the PAN coordinator in the system 101 may also be a coordinator and/or the PAN coordinator in the system 102 may also be a coordinator.

For ease of understanding of the technical solutions in embodiments of this application, some terms or concepts that may be used in embodiments of this application are first briefly described.

1. UWB technology: A UWB technology is a wireless communication/ranging/sensing technology that uses a nanosecond-level non-sinusoidal narrow impulse signal, and therefore occupies a wide spectral range. For its narrow impulse and extremely low spectral density of radiation, a UWB system has advantages of a strong multipath resolution capability, low power consumption, high confidentiality, and the like, and is conducive to coexistence with another system, thereby improving spectral utilization and a system capacity.

As the Federal Communications Commission (Federal Communications Commission, FCC) approved entry of the UWB technology into the civil field in 2002, ultra-wideband wireless communication has become one of the popular physical layer technologies for short-range and high-speed wireless networks. Many world-renowned companies, research institutes, and standardization organizations are actively engaged in the research, development, and standardization of ultra-wideband wireless communication technologies. The Institute of Electrical and Electronics Engineers (Institute of Electrical and Electronics Engineers, IEEE) has incorporated the UWB technology into its IEEE 802 series wireless standards, and has released a UWB technology-based WPAN standard IEEE 802.15.4a and evolution version IEEE 802.15.4z. Currently, a next-generation UWB technology-based WPAN standard 802.15.4ab has been put on the agenda.

Because the UWB technology performs data transmission through receiving and sending of nanosecond-level or sub-nanosecond-level and extremely narrow impulses rather than a carrier in a conventional communication system, the UWB technology has a high requirement on time synchronization of a transceiver device. In addition, due to large communication bandwidth of the UWB technology, the devices have high power consumption and complexity when a signal is received and sent on an ultra-wideband channel, and most UWB communication devices are driven by a battery. It is expected to further reduce power consumption of the UWB system in a next generation standard. Therefore, all signals except ranging and sensing reference signals are received and sent in a narrowband system in a narrowband signal-assisted manner. This reduces overall power consumption overheads.

2. Power of a UWB signal: Due to large bandwidth of an ultra-wideband system, during operating, to reduce interference to another narrowband device, an FCC imposes strict restrictions on power spectral density of UWB signals. According to the Code of Federal Regulations (Code of Federal Regulations, CFR), there are the following two rules.

Rule 1: An average value of maximum power spectral density (Power Spectral Density, PSD) of transmitted UWB signals within one millisecond cannot be greater than 41.3 dBm per megahertz.

Rule 2: Maximum power of the transmitted UWB signals in any 50 MHz bandwidth cannot exceed 1 milliwatt.

Rule 1 limits total energy transmitted by UWB within one millisecond (for example, 37 nJ in a case of 500 MHz bandwidth). The energy is transmitted in shorter time. This increases instantaneous power of the transmit signal, enlarges signal coverage, and increases a signal-to-noise ratio of a signal received at a receive end. Based on this, in some scenarios in which transmit power needs to be increased, a transmit end divides a to-be-transmitted UWB signal into a plurality of fragment signals, where a time length of each fragment signal is less than one millisecond, and then sends only one fragment signal in each millisecond.

For ease of understanding, a UWB signal is briefly described with reference to FIG. 2. FIG. 2 is a diagram of the UWB signal according to an embodiment of this application.

It can be seen from FIG. 2 that a transmit end divides the to-be-transmitted UWB signal into a plurality of fragment signals (for example, a UWB fragment signal #1, a UWB fragment signal #2, and a UWB fragment signal #3 shown in FIG. 2). A time length of each fragment signal is less than 1 millisecond, and one of the fragment signals is sent in each millisecond. A signal type of a fragment signal is also a UWB signal.

In addition, the "fragment signal" in this application may also be referred to as a "block signal", a "short signal", a "partial signal", a "fragment", a "block", or the like. A name of the fragment signal is not limited, and can identify that a UWB signal is divided into a plurality of UWB signals. A time length of each of the plurality of UWB signals obtained after division is less than 1 millisecond, and one UWB signal obtained after division is sent in each millisecond. Optionally, the plurality of fragment signals obtained by dividing the UWB signal may be the same. For example, the plurality of fragment signals obtained by dividing the UWB signal are preambles (preambles) with a same configuration. The same configuration of the preambles includes but is not limited to a preamble length, a sequence used by the preamble, and the like.

It can be learned from the foregoing that, the to-be-transmitted UWB signal is divided into the plurality of fragment signals for fragment transmission. This can increase instantaneous power of the UWB signal, but cannot increase the instantaneous power infinitely. Rule 2 actually limits a power increase multiple for UWB-based fragment transmission.

For example, in this application, UWB-based fragment transmission may also be referred to as multi-millisecond (multi-mille second, MMS) transmission.

3. Impulse radio ultra-wideband (Impulse Radio Ultra-Wideband, IR-UWB) system: Due to large bandwidth of an ultra-wideband system, a device of the ultra-wideband system needs to have an ultra-high-speed data receiving and sending capability. However, spectral efficiency of the IR-UWB system based on impulse transmission is low, and when same information is transmitted, power consumption overheads required by an IR-UWB solution are much higher than those of another narrowband short-range protocol (for example, Bluetooth or ZigBee).

4. Ranging or sensing: In a ranging or sensing scenario, precision of a measurement or sensing result is related to signal bandwidth. Larger signal bandwidth indicates higher precision of a result obtained through sensing or ranging. Therefore, it may be considered that a reference signal for ranging or sensing is received and sent by using a UWB system, and another reference signal and/or data is transmitted based on a narrowband protocol. This can ensure ranging and sensing precision, and also reduce power consumption. Sensing in this application may be understood as a bottom-layer sensing technology in an internet of things technology architecture, and is a primary step for obtaining information and implementing object control in internet of things. Ranging may be understood as measurement of a distance between devices, including but not limited to measurement of a distance between two objects in internet of things.

For example, in this application, a UWB technical solution combining narrowband-assisted UWB and multi-millisecond transmission may also be referred to as narrowband-assisted multi-millisecond ultra-wideband (Narrowband-assisted multi-millisecond Ultra-wideband, NBA-MMS UWB).

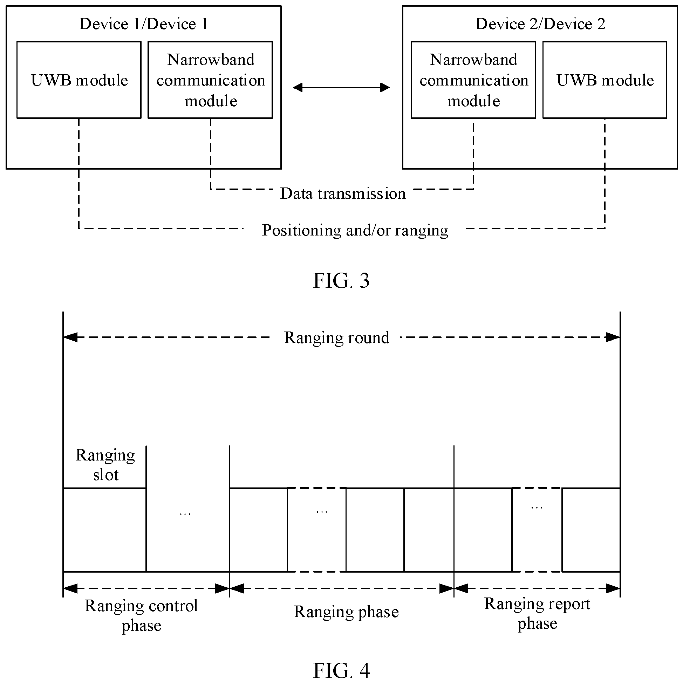

For ease of understanding, a ranging/positioning system to which the foregoing ranging technology is applied is briefly described with reference to FIG. 3. FIG. 3 is a diagram of an architecture of the ranging/positioning system according to an embodiment of this application. As shown in FIG. 3, the ranging/positioning system includes a plurality of devices (a device 1 and a device 2 shown in FIG. 3), and may be an apparatus in embodiments of this application. Each device includes at least a UWB module, and further, the device may further include a narrowband communication module. Any one of ranging, positioning, and communication may be performed between the UWB modules of the device 1 and the device 2. If the devices include the narrowband communication module, data transmission may be performed between the narrowband communication modules of the device 1 and the device 2 through a radio link.

In this application, the UWB module may be understood as an apparatus, a chip, a system, or the like that implements a UWB wireless communication technology. Correspondingly, the narrowband communication module may be understood as an apparatus, a chip, a system, or the like that implements a narrowband communication technology (like Wi-Fi, Bluetooth, or Zigbee (a ZigBee protocol)). In one device (device), a UWB module and a narrowband communication module may be different apparatuses or chips. Certainly, the UWB module and the narrowband communication module may alternatively be integrated into one apparatus or chip. Embodiments of this application do not limit implementations of the UWB module and the narrowband communication module in the device. The UWB technology can enable a communication apparatus to have a high data throughput and enable apparatus positioning to have high precision.

The device in this application may be a wireless communication chip, a wireless sensor, or a wireless communication terminal, for example, a user terminal, a user apparatus, an access apparatus, a subscriber station, a subscriber unit, a mobile station, a user agent, and user equipment that support a Wi-Fi communication function. The user terminal may include various handheld devices, vehicle-mounted devices, wearable devices, internet of things (internet of things, IoT) devices, or computing devices that have a wireless communication function, or another processing device connected to a wireless modem, user devices (user equipment, UE) of various forms, a mobile station (mobile station, MS), a terminal (terminal), a terminal device (terminal equipment), a portable communication device, a handheld device, a portable computing device, an entertainment device, a game device or system, a global positioning system device, or any other appropriate device configured to perform network communication via a wireless medium. In addition, the device may support the 802.15.4ab standard or a next-generation standard of 802.15.4ab. The device further supports a plurality of standards, such as 802.15.4a, 802.15.4-2011, 802.15.4-2015, and 802.15.4z. The device may further support a plurality of wireless local area network (wireless local area network, WLAN) standards of the 802.11 family, for example, 802.11 ax, 802.11ac, 802.11n, 802.11g, 802.11b, 802.11a, and a next generation of 802.11be.

5. Figure of merit (figure of merit, FoM) field: In a previous generation IEEE 802.15.4z standard and an earlier UWB standard, the FoM field is used to evaluate a confidence level of a ranging signal. Specifically, the FoM field indicates an accuracy degree of estimating time of arrival of the ranging signal.

For example, the time of arrival of the ranging signal is used to determine a ranging result. That the FoM field indicates the accuracy degree of estimating the time of arrival of the ranging signal may also be understood that the FoM field is used to evaluate a confidence level of the ranging result. In this application, the FoM field may also be referred to as a ranging confidence level field, and indicates a ranging confidence level.

Specifically, the ranging confidence level field is shown in the following Table 1:

**Table 1: Ranging confidence level field list**

| Bits: 0-2 | 3-4 | 5-6 | 7 |
|---|---|---|---|
| Confidence level | Confidence interval | Confidence interval scaling factor | Extension field |

Meanings of specific content of the "confidence level" field in Table 1 are shown in the following Table 2.

**Table 2: Confidence level field content**

| Confidence level value index | Confidence level |
|---|---|
| 0 | No FoM |
| 1 | 20% |
| 2 | 55% |
| 3 | 75% |
| 4 | 85% |
| 5 | 92% |
| 6 | 97% |
| 7 | 99% |

A higher confidence level value in Table 2 indicates that a current ranging result is more reliable, where 'no FoM' in Table 2 indicates that the current ranging result is incorrect or cannot be used.

6. Ranging round (ranging round): In a previous generation IEEE 802.15.4z standard, a single ranging process is defined as a ranging round. A minimum processing time unit of each ranging round is a ranging slot (ranging slot). One ranging round is classified into three phases: a ranging control phase (ranging control phase), a ranging phase (ranging phase), and a ranging result report phase (measurement report phase). FIG. 4 is a diagram of phases of the UWB ranging round. It can be seen from FIG. 4 that, in IEEE 802.15.4z, the ranging control phase includes one ranging slot, while in the IEEE 802.15.4ab standard currently under discussion, the ranging control phase may include more than one ranging slot.

It should be noted that the signaling transmission method provided in this application is applied to not only narrowband protocol-assisted UWB ranging, but also narrowband protocol-assisted UWB sensing or another measurement procedure. Therefore, in this application, the ranging control phase shown in FIG. 4 may be understood as a measurement control phase, the ranging phase may be understood as a measurement phase, and the ranging result report phase may be understood as a measurement result report phase. For example, the signaling transmission method provided in this application is applied to a narrowband protocol-assisted UWB sensing procedure. A measurement control phase may be understood as a sensing control phase, a measurement phase may be understood as a sensing phase, and a measurement result report phase may be understood as a sensing result report phase.

In addition, it should be further noted that names of different phases of the foregoing single measurement round are merely examples, and do not constitute any limitation on the protection scope of this application. For example, the measurement control phase may be understood as a phase for configuring a parameter required in a measurement round; for another example, the measurement phase may be understood as a phase for measurement; and for still another example, the measurement result report phase may be understood as a phase for reporting a measurement result, and may also be referred to as an end of the measurement phase.

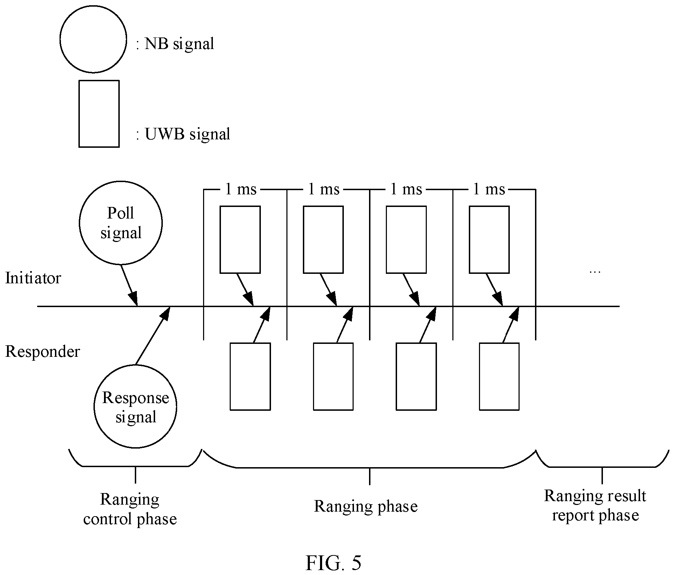

For ease of understanding, the following briefly describes a narrowband protocol-assisted UWB ranging method with reference to FIG. 5. FIG. 5 is a diagram of a UWB ranging method. In FIG. 5, an initiator (initiator) and a responder (responder) are included. By way of example, and not limitation, the initiator may be a device having a communication capability in a WPAN (for example, the FFD or the RFD shown in FIG. 1). Similarly, the responder may also be a device (for example, the FFD or the RFD shown in FIG. 1) having a communication capability in the WPAN.

In addition, a structure of the initiator and a structure of the responder may be a structure of the device 1 or the device 2 shown in FIG. 3. For example, the initiator and the responder each include a UWB module and a narrowband communication module.

It can be seen from FIG. 5 that, a narrowband (Narrowband, NB) signal is exchanged between the initiator (initiator) and the responder (responder) to complete processes such as configuration and synchronization for UWB NBA-MMS ranging. For example, the initiator sends a narrowband poll (Poll) signal, and the responder responds with a response (Resp) signal to perform a handshake. Information carried in the poll signal includes but is not limited to one or more of the following: a ranging round-related parameter configuration, a ranging signal preamble (preamble)-related parameter configuration (a preamble length, a sequence used by a preamble, and the like), a UWB packet type (SP 0 to SP 3), a device role, slot scheduling allocation, and the like.

In a ranging control phase, the responder roughly estimates, based on power strength of the NB signal received from the initiator, a number of fragment signals of a UWB ranging signal that need to be used in a ranging phase in a current UWB ranging round (for example, when the power strength of the NB signal is high, a signal noise ratio (signal noise ratio, SNR) is high, and signal quality is good, it is determined that a small number of fragment signals are used; or when the power strength of the NB signal is low, an SNR is low, and signal quality is poor, it is determined that a large number of fragment signals are used), and feeds back the roughly estimated number of fragment signals of the UWB ranging signal to the initiator. The initiator determines, based on the number of fragment signals fed back by the responder, a number of fragment signals of the UWB ranging signal that are required in the ranging phase.

Specifically, after receiving the response frame, the initiator performs round-trip time measurement with the responder in a manner of fragment transmission on a UWB channel. After the measurement is completed, the responder sends a measurement result (report) to the initiator by using a narrowband system.

The foregoing describes, with reference to FIG. 1, the scenarios to which embodiments of this application are applied, further briefly describes the basic concepts in this application, and briefly describes the UWB ranging method with reference to FIG. 5. The method has the following disadvantages.

An NB channel and a UWB channel have different bandwidth and signal waveforms. As a result, conditions of the NB channel and the UWB channel are greatly different, and channel attenuation is different. Specifically, the UWB signal has nanosecond-level ultra-short impulse duration, high time resolution, and very wide transmission bandwidth. In an indoor multipath environment, a UWB receiver can coherently increase impulse energy received from each multipath component to provide a gain for reception over a single path. According to the existing research, in an indoor multipath case, a level strength value of a UWB receive signal may fluctuate from -5 dB to +5 dB relative to an average level strength value. Therefore, a probability of deep fading of the UWB signal is low, which can effectively resist multipath fading.

In contrast, the NB signal is more likely to be affected by a multipath signal. According to the existing research, in an indoor multipath case, level strength of an NB receive signal may fluctuate from -20 dB and -30 dB relative to an average value. Therefore, a probability of deep fading of the NB signal is high, making it difficult to resist multipath fading.

In conclusion, in the UWB ranging method shown in FIG. 5, if the responder roughly estimates, based on the strength of the NB signal, the number of fragment signals of the UWB ranging signal that are required in the UWB ranging phase, serious distortion occurs. This misleads the initiator in parameter configuration in the ranging phase, and reduces system efficiency. For example, the initiator may incorrectly configure a large number of fragment signals of the UWB ranging signal in the ranging phase. This results in excessively long ranging time, affects access of another ranging user and implementation of a ranging task, prolongs a system delay, and reduces system efficiency. In addition, an incorrect configuration of the number of fragment signals of the UWB signal may cause improper configurations of on-time periods of receivers of a receive end/transmit end device, and further cause excessively fast power consumption because the receive end/transmit end device cannot effectively sleep, and affects work duration of the receive end/transmit end device. To resolve problems in the foregoing UWB ranging method, this application provides a signaling transmission method. A number of fragment signals of a UWB signal transmitted in a measurement phase is determined based on a UWB signal transmitted in a control phase. This improves accuracy of determining the number of fragment signals of the UWB signal. The following describes, with reference to the accompanying drawings, in detail the signaling transmission method provided in this application.

A specific structure of an execution body of the method provided in embodiments of this application is not specially limited in the following embodiments, provided that a program that records code of the method provided in embodiments of this application can be run to perform communication according to the method provided in embodiments of this application. For example, the method provided in embodiments of this application may be performed by a transceiver device, or a functional module that is in the transceiver device and that can invoke and execute a program.

For ease of understanding of embodiments of this application, the following descriptions are provided.

First, in this application, "indicate" may include "directly indicating" and "indirectly indicating". When a piece of information is described to indicate A, the information may directly indicate A or indirectly indicate A, but it does not indicate that the information definitely carries A.

Information indicated by the information is referred to as to-be-indicated information. In a specific implementation process, the to-be-indicated information may be indicated in a plurality of manners, for example, but not limited to, a manner in which the to-be-indicated information, for example, the to-be-indicated information or an index of the to-be-indicated information may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated in an arrangement sequence of a plurality of pieces of information that are pre-agreed on (for example, stipulated in a protocol), to reduce indication overheads to some extent. In addition, a common part of all pieces of information may be identified and indicated in a unified manner, to reduce indication overheads caused by separately indicating same information.

Second, various numeric numbers such as first and second (for example, "#1" and "#2") shown in this application are merely for ease of description, and are used to distinguish between objects, but are not intended to limit the scope of embodiments of this application, for example, the numeric numbers are used to differentiate between different channels, but are not for describing a particular order or sequence. It should be understood that the objects described in such a way are interchangeable in an appropriate circumstance, so that a solution other than embodiments of this application can be described.

Third, in this application, "preset" may include "predefined", for example, defined in a protocol. "Predefined" may be implemented in a manner of prestoring corresponding code, a table, or other related information that may be for indication in a device (for example, including network elements). A specific implementation is not limited in this application.

Fourth, "save" in embodiments of this application may mean that saved in one or more storages. The one or more storages may be separately disposed, or may be integrated into an encoder or a decoder, a processor, or a communication apparatus. Alternatively, a part of the one or more storages may be separately disposed, and a part of the one or more storages are integrated into the decoder, the processor, or the communication apparatus. A type of the storage may be a storage medium in any form. This is not limited in this application.

Fifth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification usually indicates an "or" relationship between associated objects.

Sixth, a "protocol" in embodiments of this application may be a standard protocol in the communication field, for example, may include a Wi-Fi protocol, and a related protocol applied to a future communication system. This is not limited in this application.

Without loss of generality, the following describes in detail the signaling transmission method provided in embodiments of this application by using interaction between the transmit end device and the receive end device as an example. The transmit end device may also be referred to as a transmit end for short, and the receive end device may also be referred to as a receive end for short.

By way of example, and not limitation, the transmit end device may be a device having a communication capability in a WPAN, for example, an FFD or an RFD. Similarly, the receive end device may also be a device having a communication capability in the WPAN, for example, an FFD or an RFD.

It should be understood that specific types and names of the transmit end device and the receive end device are not limited in this application, provided that the transmit end device and the receive end device are communication devices that can receive and send a UWB signal and an NB signal.

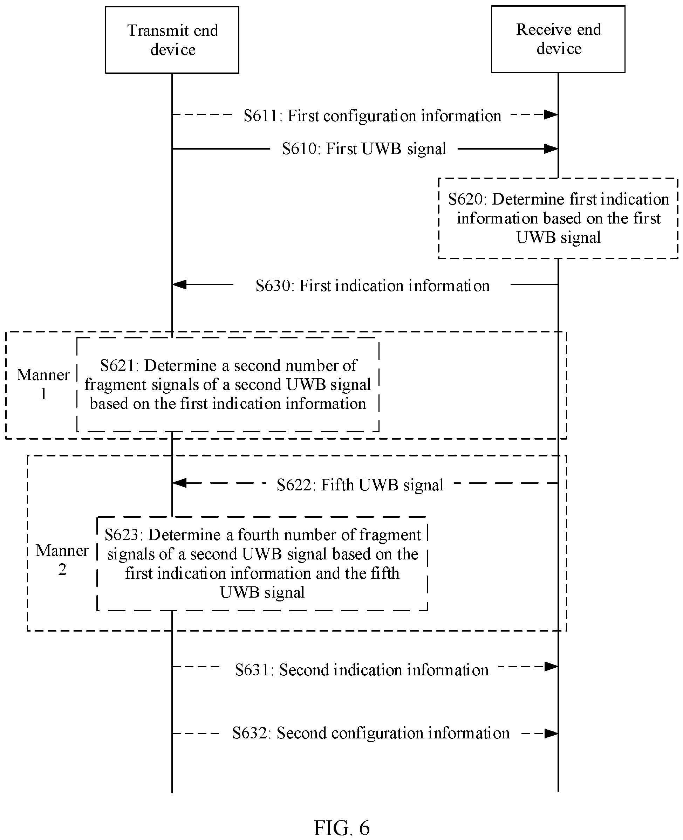

FIG. 6 is a schematic flowchart of a signaling transmission method according to an embodiment of this application. The method includes the following steps.

S610: A transmit end device sends a first UWB signal to a receive end device, or a receive end device receives a first UWB signal from a transmit end device.

Specifically, the transmit end device sends the first UWB signal to the receive end device in a control phase of a first round. The first round may be any measurement round in a measurement procedure, and an initial configuration of the measurement round is completed in the control phase. Measurement includes a measurement process, like ranging or sensing, performed based on a UWB signal. For example, the first round is any ranging round; or for another example, the first round is any sensing round.

For example, the receive end device receives the first UWB signal from the transmit end device in a ranging control phase, and at least one ranging slot is needed by the transmit end device to send the first UWB signal. In this embodiment, the ranging control phase may include more than one ranging slot, where at least one ranging slot in the more than one ranging slot is for sending the first UWB signal.

In this embodiment, the first UWB signal is used to determine first indication information, and the first indication information indicates a first number of fragment signals of a second UWB signal. The fragment signals of the second UWB signal may be understood as fragment signals obtained by dividing the second UWB signal.

Optionally, the fragment signals included in the second UWB signal are the same. For example, the fragment signals included in the second UWB signal are preambles with a same configuration. The same configuration of the preambles includes but is not limited to a preamble length, a sequence used by the preamble, and the like.

For ease of distinguishing, the first UWB signal may be referred to as a UWB test signal, and the second UWB signal may be referred to as a UWB measurement signal. The second UWB signal includes a UWB ranging signal and/or a UWB sensing signal. The second UWB signal may be understood as a UWB signal that is transmitted in a measurement phase (for example, a ranging phase or a sensing phase) of a first round and that is used to implement measurement.

It should be noted that a specific function of the second UWB signal is not limited in embodiments of this application. The second UWB signal may be a UWB signal for ranging, or may be a UWB signal for sensing, or may be a UWB signal that implements another measurement function. Examples are not enumerated herein.

In addition, the first number of fragment signals of the second UWB signal may be understood as follows: The second UWB signal is divided into a plurality of fragment signals (as shown in FIG. 2) in a transmission process. A time length of each fragment signal is less than 1 millisecond, and then only one fragment signal is sent in each millisecond, where the number of the plurality of fragment signals is denoted as the first number. For example, fragment signals included in the plurality of fragment signals are the same. For example, the fragment signals included in the plurality of fragment signals are preambles with a same configuration. The same configuration of the preambles includes but is not limited to a preamble length, a sequence used by the preamble, and the like.

Optionally, when a number of fragment signals of the second UWB signal expected by the transmit end device is different from a number of fragment signals of the second UWB signal expected by the receive end device, the transmit end device and the receive end device may negotiate to obtain an appropriate number of fragment signals of the second UWB signal for transmission. The following describes a negotiation process with reference to specific steps, and details are not described herein again.

In a possible implementation, the first indication information implicitly indicates the number of fragment signals. For example, the first indication information is a fragment signal number index, and the fragment signal number index indicates the first number of fragment signals of the second UWB signal expected by the transmit end device. For another example, the first indication information is a FoM value corresponding to the first UWB signal, and the FoM value is used to determine the first number of fragment signals of the second UWB signal expected by the transmit end device.

For example, the transmit end device and the receive end device obtain or locally store a second mapping relationship (for example, the transmit end device and the receive end device negotiate to determine and store the second mapping relationship, or the second mapping relationship is predefined in a protocol), and the second mapping relationship is a mapping relationship between a fragment signal number index and a number of fragment signals. In other words, after receiving the fragment signal number index, the transmit end device may determine the number of fragment signals based on the locally stored second mapping relationship.

For example, the second mapping relationship is shown in the following Table 3a.

**Table 3a: Mapping relationship between a fragment signal number index and a number of fragment signals**

| FNI | 000 | 001 | 010 | 011 | 100 | 101 | 110 | 111 |
|---|---|---|---|---|---|---|---|---|
| Meaning | 1 fragment signal | 2 fragment signals | 4 fragment signals | 8 fragment signals | 16 fragment signals | 32 fragment signals | Reserved | Reserved |

FNI indicates a fragment signal number index (Fragment Number Index, FNI).

For another example, the transmit end device and the receive end device obtain or locally store a third mapping relationship (for example, the transmit end device and the receive end device negotiate to determine and store the third mapping relationship, or the third mapping relationship is predefined in a protocol), and the third mapping relationship is a mapping relationship between a FoM value and a number of fragment signals. In other words, after receiving the FoM value, the transmit end device may determine the number of fragment signals based on the locally stored third mapping relationship.

For example, the third mapping relationship is shown in the following Table 3b.

**Table 3b: Mapping relationship between a FoM value and a number of fragment signals**

| FoM value | Number of fragment signals |
|---|---|
| 0 | 32 |
| 1 | 16 |
| 2 | 8 |
| 3 | 4 |
| 4 | 2 |
| 5 | 1 |
| 6 | 1 |
| 7 | 1 |

In another possible implementation, the first indication information explicitly indicates the number of fragment signals. For example, a value of the first indication information is the number of fragment signals.

For example, when the value of the first indication information is 1, it indicates that the number of the fragment signals is 1; when the value of the first indication information is 2, it indicates that the number of the fragment signals is 2; ..., and when the value of the first indication information is N, it indicates that the number of the fragment signals is N, where N is a positive integer.

It should be understood that the foregoing is merely examples for describing possible forms of the first indication information, and does not constitute any limitation on the protection scope of this application. Other indication information that can indicate the number of fragment signals falls within the protection scope of this application. For example, the first indication information indicates a confidence level corresponding to the first UWB signal, and the confidence level corresponding to the first UWB signal is used to determine the first number of fragment signals of the second UWB signal expected by the transmit end device. For ease of description, the following uses an example in which the first indication information is a fragment signal number index for description.

It can be learned from the foregoing that the first UWB signal is used to determine the first indication information, and after receiving the first UWB signal, the receive end device can determine the first indication information based on the first UWB signal. Optionally, a method procedure shown in FIG. 6 further includes the following step.

S620: The receive end device determines the first indication information based on the first UWB signal.

Specifically, that the receive end device determines the first indication information based on the first UWB signal includes the following steps.

Step 1: The receive end device determines, based on quality of the first UWB signal, a confidence level corresponding to the first UWB signal.

For example, when the quality of the first UWB signal is good, it is determined (or estimated) that the confidence level corresponding to the first UWB signal is high, and optionally, a corresponding FoM value is large, or when the quality of the first UWB signal is poor, it is estimated that the confidence level corresponding to the first UWB signal is low, and optionally, a corresponding FoM value is small.

It should be understood that, in this embodiment, how to determine, based on the quality of the first UWB signal, the confidence level corresponding to the first UWB signal is not limited. For details, refer to descriptions about determining, based on signal quality, a confidence level corresponding to a model in the current related technology. Details are not described herein again.

Further, after the confidence level corresponding to the first UWB signal is determined, step 2 is performed.

Step 2: The receive end device determines the first indication information based on the confidence level corresponding to the first UWB signal.

For example, there is a mapping relationship (referred to as a first mapping relationship for ease of differentiation) between a confidence level and a number of fragment signals of the second UWB signal. The receive end device may determine the number of fragment signals of the second UWB signal based on the confidence level and the first mapping relationship, so as to determine the first indication information. The first mapping relationship is the mapping relationship between the confidence level and the number of fragment signals.

For example, the first mapping relationship is shown in following Table 4a and Table 4b.

Table 4a: Example 1 of a mapping relationship between a confidence level and a number of fragment signals

| Confidence level index | Confidence level | Number of fragment signals | FNI |
| --- | --- | --- | --- |
| 0 | No FoM | 32 | 101 |
| 1 | 20% | 16 | 100 |
| 2 | 55% | 8 | 011 |
| 3 | 75% | 4 | 010 |
| 4 | 85% | 2 | 001 |
| 5 | 92% | 1 | 000 |
| 6 | 97% | 1 | 000 |
| 7 | 99% | 1 | 000 |

Table 4b: Example 2 of a mapping relationship between a confidence level and a number of fragment signals

| Confidence level index | Confidence level | Number of fragment signals | FNI |
| --- | --- | --- | --- |
| 0 | No FoM | 16 | 100 |
| 1 | 20% | 8 | 011 |
| 2 | 55% | 4 | 010 |
| 3 | 75% | 4 | 010 |
| 4 | 85% | 2 | 001 |
| 5 | 92% | 2 | 001 |
| 6 | 97% | 2 | 001 |
| 7 | 99% | 1 | 000 |

It should be noted that Table 4a and Table 4b indicate possible forms of the first mapping relationship by using examples, and do not constitute any limitation on the protection scope of this application. The first mapping relationship may alternatively be in another form that can indicate a relationship between a confidence level and a number of fragment signals. For example, Table 4a and Table 4b include two columns: a confidence level and a number of fragment signals, and a confidence level index and an FNI are optional. Examples are not described herein again one by one.

It can be seen from Table 4a and Table 4b that a higher confidence level corresponding to the first UWB signal indicates a higher credibility level of estimated time of arrival of the signal transmitted by the device in a UWB system, and therefore a smaller number of correspondingly estimated fragment signals of the UWB signal transmitted in the UWB system.

For example, to enable the receive end device to learn of a related configuration of the first UWB signal, optionally, the method procedure shown in FIG. 6 further includes the following step.

S611: The transmit end device sends first configuration information to the receive end device, or the receive end device receives first configuration information from the transmit end device.

The first configuration information indicates the configuration of the first UWB signal.

For example, the first configuration information may be sent through a narrowband signal. For example, the first configuration information is carried in a first narrowband signal. Specifically, in this embodiment, to improve accuracy of receiving the first UWB signal, before receiving the first UWB signal, the receive end device receives the first narrowband signal from the transmit end device, where the first narrowband signal includes the first configuration information, and the first configuration information indicates the configuration of the first UWB signal.

For example, when the transmit end device is a ranging initiator device, and the receive end device is a ranging responder device, a poll signal sent by the initiator to the responder in the ranging control phase includes the first configuration information, and the first configuration information indicates the configuration of the first UWB signal. For example, the poll signal includes but is not limited to information indicating a preamble length of the first UWB signal, information indicating a sequence used by the preamble of the first UWB signal, and the like. In a possible implementation, the first UWB signal is a UWB signal sent in the control phase of the first measurement round in the measurement process, and the first configuration information may be carried in the narrowband signal transmitted in the control phase (for example, a poll signal, a response signal, or a newly added narrowband signal sent in the control phase of the first measurement round).

In another possible implementation, if the first UWB signal is a UWB signal sent in a control phase of a measurement round #1 after the first measurement round in the measurement process, the first configuration information may not be sent, for example, a configuration of a UWB signal sent in a previous measurement round may be used as the related configuration of the first UWB signal; or the first configuration information may be carried in a poll signal sent in the control phase of the measurement round #1; or the first configuration information may be sent before a poll signal is sent in the control phase of the measurement round #1.

Further, after determining the first indication information, the receive end device sends the first indication information to the transmit end device, so that the transmit end device learns of the first number of fragment signals of the second UWB signal determined by the receive end device. The method procedure shown in FIG. 6 further includes the following step.

S630: The receive end device sends the first indication information to the transmit end device, or the transmit end device receives the first indication information from the receive end device.

For example, the first indication information is transmitted through a narrowband. In other words, the first indication information may be a narrowband signal. In a possible implementation, in this embodiment, the receive end device may include the first indication information in a predefined first information element and send, to the transmit end device, the predefined first information element carrying the first indication information (for example, the first information element is transmitted through a narrowband). The predefined first information element is an information element that can be parsed by the transmit end device. The first information element further includes a first address size specifier field and/or a first address field, the first address size specifier field indicates an address type of a device that receives the first information element, and the first address field indicates an address of the device that receives the first information element.

For example, the first information element is a predefined FoM-based UWB fragment signal number estimation information element (FoM-based Fragment Number Estimation Information Element, FFNE IE). A design of the FFNE IE is shown in Table 5.

**Table 5: FFNE IE**

| Bits: 0-1 | 2-4 | 5-7 | Octets: 0/2/8 |
|---|---|---|---|
| Address size specifier (Address Size Specifier) field | FNI | Reserved | Address |

The address size specifier field indicates an address type of a device that receives the FFNE IE. The address size specifier field may also have another name, provided that the address type of the device that receives the first information element can be indicated. This is not limited in this application. The address type may include one or more of the following: a short address (that is, an address length is 2 octets) and a long address (that is, an address length is 8 octets). Optionally, an indication rule is consistent with that in a previous generation UWB standard IEEE 802.15.4z, that is:

- 00 indicates no address, namely, 0 octets (Octets);
- 01 indicates reserved;
- 10 indicates a short address, namely, 2 octets (Octets), corresponding to 16 bits; and
- 11 indicates a long address, namely, 8 octets (Octets), corresponding to 64 bits.

When a value of the address size specifier field in the FFNE IE is 00, and the address field is 0, it indicates that address information is not included. It may be understood that the receive end device broadcasts the FFNE IE. In other words, after generating the first information element, the receive end device may broadcast the first information element.

In another possible implementation, the receive end device may directly send the first indication information to the transmit end device, and the first indication information does not need to be carried in the first information element.

For example, the receive end device sends the first indication information to the transmit end device according to a source address of the received first UWB signal.

For example, a newly added FFNE IE may be identified and processed by a device that needs to perform a ranging or sensing function. In a possible implementation, a corresponding method for identifying and processing the newly added FFNE IE is similar to a method for identifying and processing a nested IE (for example, an RDM IE) stipulated in the existing protocol 802.15.4z. For details, refer to the method for identifying and processing the nested IE in the existing protocol 802.15.4z.

For example, a protocol upper layer of the transmit end device configures an FFNE IE, and transfers the FFNE IE to a MAC layer of the transmit end device.

For another example, a MAC layer of the receive end device transfers a received FFNE IE to a protocol upper layer of the receive end device, and the protocol upper layer performs identification processing on the FFNE IE.

In a possible implementation, the newly added FFNE IE may be transferred on a narrowband frequency band.

In another possible implementation, the newly added FFNE IE may alternatively be transferred on a UWB frequency band.

For ease of understanding, the following describes the newly added FFNE IE in detail with reference to Table 6.

Table 6 is an expansion and extension of Table 7 to Table 18 (Table 7 to Table 18) in the existing 802.15.4z protocol. For brevity, an existing definition in Table 7 to Table 18 in the protocol is not reflected in Table 6. Specifically, it can be seen from Table 6 below that the newly added FFNE IE may be added to a nested IE list defined in Table 7 to Table 18 (Table 7 to Table 18) in the existing 802.15.4z protocol, and used as a newly added IE in the 802.15.4ab protocol or a later version protocol. Specifically, a reserved sub-ID value (Sub-ID value) in the nested IE list defined in Table 7 to Table 18 (Table 7 to Table 18) in the existing 802.15.4z protocol may indicate the newly added FFNE IE.

**Table 6**

| Sub-ID value | IE Name | Data | Used by | Created by |
|---|---|---|---|---|
| T | FFNE IE | X | Upper Layer | Upper Layer |

T in Table 6 may be any one or more values in Ox5d to Ox7f. Table 6 may be an expansion and extension of the nested IE list defined in Table 7 to Table 18 (Table 7 to Table 18) in the existing 802.15.4z protocol. X in Table 6 indicates that the FFNE IE is an IE of a data type.

Optionally, a message carrying the first indication information may be referred to as a UWB block number feedback message, and the UWB block number feedback message is a narrowband signal. In a possible implementation, a response (Resp) message of the receive end device for a poll message and the UWB block number feedback message fed back by the receive end device to the transmit end device may be included in a same return message. That is, after receiving a poll message, the receive end device may not immediately respond, but responds to both the poll message and a UWB test block by using one message after receiving the first UWB signal and determining the first number of fragment signals of the second UWB signal. This is applicable to a scenario in which a fast bidirectional narrowband handshake connection is not needed between the transmit end device and the receive end device.

For example, in a ranging slot after the transmit end device and the receive end device respectively complete poll (Poll) initiation and response (Resp), the transmit end device sends, to the receive end device, a UWB block (for example, the first UWB signal) for a test (training) purpose. In other words, the Resp message of the receive end device and the UWB block number feedback message fed back by the receive end device to the initiator are two different messages. That is, after receiving the poll message, the receive end device may respond to the poll message, and then send the first indication information after receiving the first UWB signal and determining the first number of fragment signals of the second UWB signal. This is applicable to a scenario in which a fast bidirectional handshake connection needs to be performed between the initiator and the responder.

It should be understood that the foregoing merely describes, by using an example, how the receive end device sends the first indication information to the transmit end device, and does not constitute any limitation on the protection scope of this application. In this embodiment, how the receive end device sends the first indication information to the transmit end is not limited, provided that the first indication information can be sent to the transmit end device.

Optionally, after receiving the first indication information, the transmit end device can learn of the first number of fragment signals of the second UWB signal expected by the receive end device. Alternatively, the transmit end device may notify, by using second indication information, the receive end device of a second number of fragment signals of the second UWB signal expected by the transmit end device, or the transmit end device may notify, by using second indication information, the receive end device of a fourth number of fragment signals of the second UWB signal expected by the transmit end device.

In this embodiment, the transmit end device determines, in the following two manners, the number of fragment signals of the second UWB signal expected by the transmit end device.

Manner 1: The transmit end device performs determining based on the first number of fragment signals of the second UWB signal indicated by the received first indication information.

In Manner 1, the method procedure shown in FIG. 6 further includes the following step.

S621: The transmit end device determines the second number of fragment signals of the second UWB signal based on the first number of fragment signals of the second UWB signal.

In a possible implementation, the second number is the same as the first number. The transmit end device agrees to transmit the second UWB signal based on the first number. In the measurement phase of the first round, the transmit end device performs a UWB measurement procedure based on the first number.

In this implementation, the transmit end device may notify, by using the second indication information, the receive end device that the UWB measurement procedure may be performed based on the first number; or the transmit end device may not notify the receive end device, or the transmit end device may notify, by using acknowledgment (ACK) information, the receive end device that the UWB measurement procedure may be performed based on the first number.

In another possible implementation, the second number is different from the first number. For example, a reference factor that affects determining of the second number by the transmit end device includes but is not limited to the following.

(a) First numbers fed back by receive end devices when there are the plurality of receive end devices For example, when the first numbers fed back by the plurality of receive end devices are different, the transmit end device uses a largest first number as the second number.

For example, when there are a plurality of transmit end devices, for a method for determining, by each transmit end device, a second number of fragment signals of the second UWB signal, refer to the foregoing case in which one transmit end device corresponds to a plurality of receive end devices. In other words, a case in which a plurality of transmit end devices correspond to a plurality of receive end devices may be understood as a plurality of cases in which one transmit end device corresponds to a plurality of receive end devices. Details are not described herein again.

(b) Confidence level history information of UWB signals of previous a plurality of measurement rounds.

Manner 2: When a difference between noise levels of UWB receivers of the transmit end device and the receive end device is large, quality of UWB received signals of the UWB receivers of the transmit end device and the receive end device needs to be considered together, to determine the final number of the UWB block signals.

In Manner 2, the method procedure shown in FIG. 6 further includes the following step.

S622: The receive end device sends a fifth UWB signal to the transmit end device, or the transmit end device receives a fifth UWB signal from the receive end device.

Similar to a function of the first UWB signal sent by the transmit end device to the receive end device in S610, the fifth UWB signal is used by the transmit end device to estimate the number of fragment signals of the second UWB signal, for measurement, transmitted in the measurement phase (for example, the ranging phase or the sensing phase).

For example, the fifth UWB signal may also be referred to as a UWB test signal.

In a possible implementation, a sending slot sequence of the first indication information fed back by the receive end device to the transmit end device and the fifth UWB signal initiated by the receive end device to the transmit end device is not limited.

For example, the receive end device may first send the fifth UWB signal to the transmit end device, and then send the first indication information to the transmit end device. This is applicable to a scenario in which the receive end device needs more time to process the first UWB signal from the transmit end device.

For another example, the receive end device may first send the first indication information to the transmit end device, and then send the fifth UWB signal to the transmit end device.

For example, if the receive end device feeds back the response (Resp) message to the transmit end device after sending the fifth UWB signal, the Resp message not only includes a response to poll, but also includes the first indication information that needs to be fed back to the transmit end device. It may be understood that the Resp message and the UWB block number feedback message fed back by the receive end device to the initiator are combined.

Optionally, in Manner 2, because the UWB test signal needs to be exchanged between the transmit end device and the receive end device, the poll signal may be used to schedule and indicate a sending sequence of the UWB test signal and the narrowband signal between the transmit end device and the receive end device in the ranging control phase.

For example, the poll signal indicates slots occupied for transmitting the first UWB signal, the first indication information, the fifth UWB signal, and the following second indication information.

S623: The transmit end device determines the fourth number of fragment signals of the second UWB signal based on the first indication information and/or the fifth UWB signal.

For example, in Manner 2, the transmit end device may determine, based on a narrowband signal (for example, the first indication information) responded by the receive end device and/or a received wideband signal (for example, the fifth UWB signal), the number of fragment signals of the second UWB signal transmitted in the measurement phase.

For example, the transmit end device determines the number of fragment signals of the second UWB signal based on the received first indication information. This is similar to step S621, and details are not described herein again.

For another example, the transmit end device determines, based on a received wideband signal (for example, the fifth UWB signal), the number of fragment signals of the second UWB signal transmitted in the measurement phase. For example, the fifth UWB signal is used to determine a fifth number of fragment signals of the second UWB signal, and the transmit end device determines that the number of fragment signals of the second UWB signal is greater than or equal to the fifth number.

For another example, the transmit end device determines, based on the received first indication information and a received wideband signal (for example, the fifth UWB signal), the number of fragment signals of the second UWB signal transmitted in the measurement phase.

In a possible implementation, the fifth UWB signal is used to determine the fifth number of fragment signals of the second UWB signal. Specifically, in Manner 2, the transmit end device may finally determine, with reference to the first number of fragment signals of the second UWB signal indicated by the first indication information and the fifth number of fragment signals of the second UWB signal determined by the transmit end device based on the fifth UWB signal, the fourth number of fragment signals of the second UWB signal, for measurement, transmitted in the measurement phase (for example, the ranging phase or the sensing phase).

For example, the transmit end device uses a larger value of the first number of fragment signals of the second UWB signal and the fifth number of fragment signals of the second UWB signal as the fourth number of fragment signals of the second UWB signal; or the transmit end device uses an average value of the first number of fragment signals of the second UWB signal and the fifth number of fragment signals of the second UWB signal as the fourth number of fragment signals of the second UWB signal. It should be understood that in this embodiment, how the transmit end device determines the fourth number of fragment signals of the second UWB signal based on the first number of fragment signals of the second UWB signal and the fifth number of fragment signals of the second UWB signal is not limited, provided that the transmit end device considers the received first indication information and/or the fifth UWB signal in a procedure of determining the fourth number of fragment signals of the second UWB signal. The transmit end device may notify, by using the second indication information, the receive end device of the number of fragment signals of the second UWB signal expected by the transmit end device. The method procedure shown in FIG. 6 further includes the following step.

S631: The transmit end device sends the second indication information to the receive end device, or the receive end device receives the second indication information from the transmit end device.

Specifically, the second indication information indicates the number of fragment signals of the second UWB signal transmitted in the measurement phase of the first round.

Corresponding to Manner 1, the second indication information indicates the second number of fragment signals of the second UWB signal; or corresponding to Manner 2, the second indication information indicates the fourth number of fragment signals of the second UWB signal.

For example, the second indication information is transmitted through a narrowband. In other words, the second indication information may be a narrowband signal.

For example, the second indication information is carried in a notification message, and the notification message is used to schedule and indicate a sending sequence of the fragment signals of the second UWB signal. The notification message may be a narrowband signal.

In addition, it should be noted that a message name is not limited in embodiments of this application. The message carrying the second indication information may be referred to as a notification message, or may have another name.

Optionally, the notification message may be included in a ranging control message (Ranging Control Message, RCM).

In a possible implementation, the RCM still uses an information element defined in the previous generation IEEE 802.15.4z standard. The RCM is for a basic configuration and a scheduling indication of ranging measurement, and includes but is not limited to scheduling and an indication of a sending sequence of ranging participating devices, a configuration of a ranging round parameter, a configuration of a ranging block structure parameter, and configurations of a UWB channel and a preamble for ranging. In this implementation, some information elements in the existing RCM are reused to schedule and indicate a sending sequence of fragment signal of a UWB signal. This can improve backward compatibility of the solution.

In another possible implementation, the RCM may be a newly defined message including one or more information elements, and is for a basic configuration and a scheduling indication of a UWB signal in the measurement phase.

No limitation is imposed on the RCM in this embodiment, and all messages that can be for the basic configuration and the scheduling indication of the fragment signals of the UWB signal in the measurement phase fall within the protection scope of this application. For example, the RCM in this embodiment may also be a message including one or more information elements stipulated in an existing protocol and a newly added information element.

Similar to the foregoing first indication information, in a possible implementation, in this embodiment, the second indication information may be carried, by the transmit end device, in a predefined second information element and sent to the receive end device, where the second information element further includes a second address size specifier field and a second address field, the second address size specifier field indicates an address type of a device that receives the second information element, and the second address field indicates an address of the device that receives the second information element.

A format of the second information element is similar to a format of the first information element, and details are not described herein again.

For example, parameter configurations of the first UWB signal (and/or the fifth UWB signal) and the second UWB signal may be different. For example, parameters such as a preamble type and length may be different. The initiator may update a configuration of a preamble (preamble) of the second UWB signal (and/or the fifth UWB signal), where the update includes but is not limited to update of a preamble length, a sequence used by the preamble, and the like. An update procedure may be carried by a narrowband signal NB. Optionally, the method procedure shown in FIG. 6 further includes the following step.

S632: The transmit end device sends second configuration information to the receive end device, or the receive end device receives second configuration information from the transmit end device.

The second configuration information indicates the configuration of the second UWB signal (and/or the fifth UWB signal). For example, the second configuration information may be sent through a narrowband signal. For example, the second configuration information is carried in a second narrowband signal.

In a possible implementation, the second narrowband signal and the second indication information are one narrowband signal. It may be understood that when the second narrowband signal carrying the second configuration information and the narrowband signal (for example, the UWB block number feedback message) carrying the second indication information is one narrowband signal, signaling transmission time can be reduced, and effectiveness can be ensured. In the procedure shown in FIG. 6, the receive end device may be a measurement initiator device, or may be a measurement responder device. The following describes, with reference to specific examples, the procedure of the signaling transmission method provided in this application when the receive end device plays different roles in the ranging process.

Example 1: The transmit end device is a ranging initiator device, the receive end device is a ranging responder device, and the initiator device is a control device in the ranging procedure. The control device may be understood as a device for determining a related parameter in the ranging procedure.

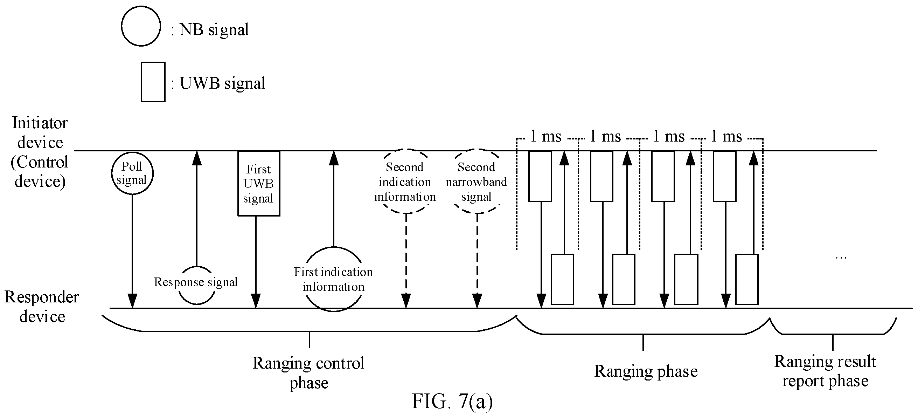

FIG. 7(a) is a schematic flowchart corresponding to Example 1, and the following steps are included.

Step 1: The initiator device sends a poll signal to the responder device.

Specifically, the poll signal includes but is not limited to a first ranging round-related parameter configuration, a UWB signal preamble (preamble)-related parameter configuration (for example, a preamble length, and a sequence used by a preamble), a UWB packet type (SP 0 to SP 3), a device role, and slot scheduling allocation.

For example, the poll signal may be understood as the first narrowband signal in the embodiment shown in FIG. 6.

Step 2: The responder device sends, to the initiator device, a response signal in response to the poll signal.

Step 3: In a ranging control phase, the initiator device sends a first UWB signal to the responder device.

For related descriptions of the first UWB signal, refer to the descriptions of the first UWB signal in the embodiment shown in FIG. 6. Details are not described herein again.

Step 4: The responder device sends first indication information to the initiator device.

For related descriptions of the first indication information, refer to the descriptions of the first indication information in the embodiment shown in FIG. 6. Details are not described herein again.

For example, the first indication information and the response signal in response to the poll signal may be combined for sending. FIG. 7(a) does not show this case.

Step 5: The initiator device sends second indication information to the responder device.

For related descriptions of the second indication information, refer to the descriptions of the second indication information in the embodiment shown in FIG. 6. Details are not described herein again.

Step 6: The initiator device sends a second narrowband signal to the responder device.

For related descriptions of the second narrowband signal, refer to the descriptions of the second narrowband signal in the embodiment shown in FIG. 6. Details are not described herein again.

After step 1 to step 6, the initiator device and the responder device may transmit a UWB ranging signal based on a determined number of fragment signals of the UWB ranging signal and a parameter configured by using the second narrowband signal, to perform a subsequent procedure of the UWB ranging.

For example, the second indication information indicates that the number of fragment signals of the UWB ranging signal is 4.

Example 2: The transmit end device is a ranging responder device, the receive end device is a ranging initiator device, and the transmit end device is a control device in the ranging procedure.

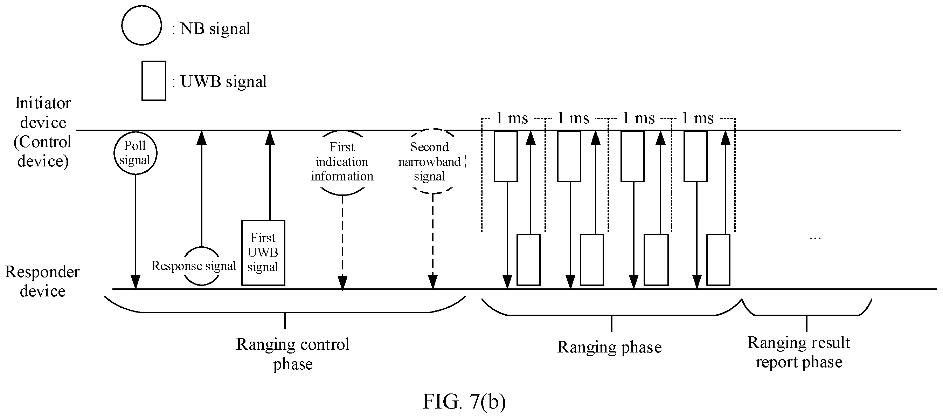

FIG. 7(b) is a schematic flowchart corresponding to Example 2, and the following steps are included.

Step 1: The initiator device sends a poll signal to the responder device.

Specifically, the poll signal includes but is not limited to a first ranging round-related parameter configuration, a UWB signal preamble (preamble)-related parameter configuration (for example, a preamble length, and a sequence used by a preamble), a UWB packet type (SP 0 to SP 3), a device role, and slot scheduling allocation.

For example, the poll signal may be understood as the first narrowband signal in the embodiment shown in FIG. 6.

Step 2: The responder device sends, to the initiator device, a response signal in response to the poll signal.

Step 3: In a ranging control phase, the responder device sends a first UWB signal to the initiator device.

Step 4: The initiator device sends first indication information to the responder device.

Step 5: The initiator device sends a second narrowband signal to the responder device.

For related descriptions of the second narrowband signal, refer to the descriptions of the second narrowband signal in the embodiment shown in FIG. 6. Details are not described herein again.

After step 1 to step 5, the initiator device and the responder device may transmit a UWB ranging signal based on a determined number of fragment signals of the UWB ranging signal and a parameter configured by using the second narrowband signal, to perform a subsequent procedure of the UWB ranging.

For example, the first indication information indicates that the number of fragment signals of the UWB ranging signal is 4.

Example 3: The transmit end device is a ranging initiator device, the receive end device is a ranging responder device, and a control device is further included.

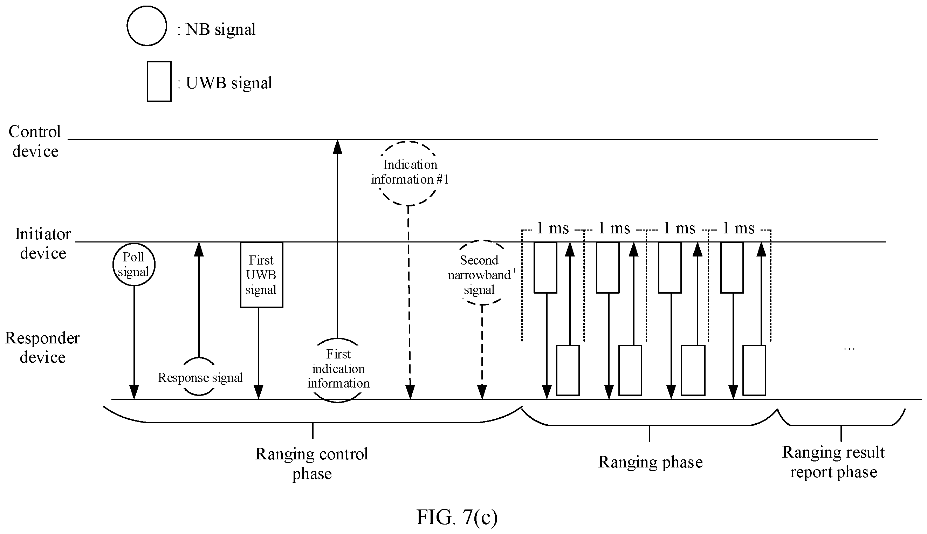

FIG. 7(c) is a schematic flowchart corresponding to Example 3, and the following steps are included.

Step 1: The initiator device (or the control device) sends a poll signal to the responder device.

Specifically, the poll signal includes but is not limited to a first ranging round-related parameter configuration, a UWB signal preamble (preamble)-related parameter configuration (for example, a preamble length, and a sequence used by a preamble), a UWB packet type (SP 0 to SP 3), a device role, and slot scheduling allocation.

For example, the poll signal may be understood as the first narrowband signal in the embodiment shown in FIG. 6.

Step 2: The responder device sends, to the initiator device, a response signal in response to the poll signal.

Step 3: In a ranging control phase, the initiator device sends a first UWB signal to the responder device.

Step 4: The responder device sends first indication information to the control device.

For related descriptions of the first indication information, refer to the descriptions of the first indication information in the embodiment shown in FIG. 6. Details are not described herein again.

For example, the first indication information and the response signal in response to the poll signal may be combined for sending. FIG. 7(c) does not show this case.

Step 5: The control device sends indication information # 1 to the initiator device and the responder device.

The control device determines, based on a first number of blocks, whether to transmit a second UWB signal. When the control device determines, based on the first number of blocks, to transmit the second UWB signal, the control device sends the indication information #1 to the receive end device and the transmit end device. For example, an information element #1 is broadcast, and the information element #1 includes the indication information #1. For another example, an information element #2 and an information element #3 are sent to the receive end device and the transmit end device respectively, and the information element #2 and the information element #3 each include the indication information #1.

Step 6: The initiator device (or the control device) sends a second narrowband signal to the responder device.

After step 1 to step 6, the initiator device and the responder device may transmit a UWB ranging signal based on a determined number of fragment signals of the UWB ranging signal and a parameter configured by using the second narrowband signal, to perform a subsequent procedure of the UWB ranging.

For example, the indication information #1 indicates that the number of fragment signals of the UWB ranging signal is 4.

Specifically, FIG. 7(a) to FIG. 7(c) correspond to a case in which the transmit end device determines the number of fragment signals of the second UWB signal based on the first indication information sent by the receive end device. It can be learned from the procedure shown in FIG. 6 that the transmit end device may further determine the number of fragment signals of the second UWB signal based on the first indication information sent by the receive end device and/or the UWB test signal sent by the receive end. The following describes, by using an example in which the transmit end device is a ranging initiator device, the receive end device is a ranging responder device, and the initiator device is a control device in a ranging procedure, a specific procedure of the embodiment described in FIG. 6 when the transmit end device determines the number of fragment signals of the second UWB signal based on the first indication information sent by the receive end device and/or the UWB test signal sent by the receive end.

In a possible implementation, the following steps are included.

Step 1a: The initiator device sends a poll signal to the responder device.

For example, the poll signal indicates a sending sequence of a UWB test signal and a narrowband signal between the initiator device and the responder device in a ranging control phase.

For example, the poll signal may be understood as the first narrowband signal in the embodiment shown in FIG. 6.

Step 2a: In the ranging control phase, the initiator device sends a first UWB signal to the responder device.

For related descriptions of the first UWB signal, refer to the descriptions of the first UWB signal in the embodiment shown in FIG. 6. Details are not described herein again.

Step 3a: The responder device sends, to the initiator device, a response signal in response to the poll signal.

For example, a response (Resp) message of the responder device for a poll message and a UWB block number feedback message fed back by the responder device to the initiator device are included in a same return message.

Step 4a: The responder device sends a fifth UWB signal to the initiator device.

For related descriptions of the fifth UWB signal, refer to the descriptions of the fifth UWB signal in the embodiment shown in FIG. 6. Details are not described herein again.

Step 5a: The initiator device sends second indication information to the responder device.

For related descriptions of the second indication information, refer to the descriptions of the second indication information in the embodiment shown in FIG. 6. Details are not described herein again.

Step 6a: The initiator device sends a second narrowband signal to the responder device.

For related descriptions of the second narrowband signal, refer to the descriptions of the second narrowband signal in the embodiment shown in FIG. 6. Details are not described herein again.

After step 1a to step 6a, the initiator device and the responder device may transmit a UWB ranging signal based on a determined number of fragment signals of the UWB ranging signal and a parameter configured by using the second narrowband signal, to perform a subsequent procedure of the UWB ranging.

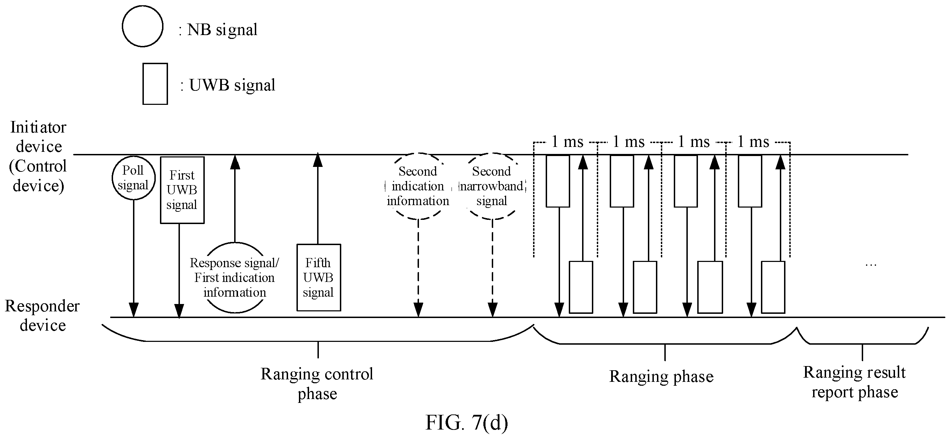

The foregoing step 1a to step 6a are shown in FIG. 7(d). It should be noted that a sequence of the foregoing step 1a to step 6a is not limited.

In another possible implementation, the following steps are included.

Step 1b: The initiator device sends a poll signal to the responder device.

For example, the poll signal indicates a sending sequence of a UWB test signal and a narrowband signal between the initiator device and the responder device in a ranging control phase.

For example, the poll signal may be understood as the first narrowband signal in the embodiment shown in FIG. 6.

Step 2b: The responder device sends, to the initiator device, a response signal in response to the poll signal.

Step 3b: In the ranging control phase, the initiator device sends a first UWB signal to the responder device.

For related descriptions of the first UWB signal, refer to the descriptions of the first UWB signal in the embodiment shown in FIG. 6. Details are not described herein again.

Step 4b: The responder device sends first indication information to the initiator device.

In this implementation, a Resp message sent by the responder device and a UWB block number feedback message fed back by the responder device to the initiator device are not combined.

Step 5b: The responder device sends a fifth UWB signal to the initiator device.

For related descriptions of the fifth UWB signal, refer to the descriptions of the fifth UWB signal in the embodiment shown in FIG. 6. Details are not described herein again.

Step 6b: The initiator device sends second indication information to the responder device.

For related descriptions of the second indication information, refer to the descriptions of the second indication information in the embodiment shown in FIG. 6. Details are not described herein again.

Step 7b: The initiator device sends a second narrowband signal to the responder device.

For related descriptions of the second narrowband signal, refer to the descriptions of the second narrowband signal in the embodiment shown in FIG. 6. Details are not described herein again.

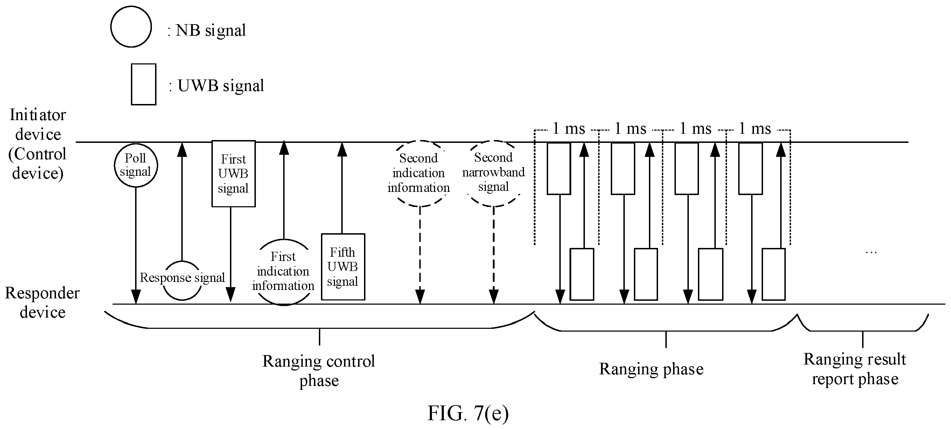

The foregoing step 1b to step 6b are shown in FIG. 7(e).

In another possible implementation, the following steps are included.

Step 1c: The initiator device sends a poll signal to the responder device.

For example, the poll signal indicates a sending sequence of a UWB test signal and a narrowband signal between the initiator device and the responder device in a ranging control phase.

For example, the poll signal may be understood as the first narrowband signal in the embodiment shown in FIG. 6.

Step 2c: The responder device sends, to the initiator device, a response signal in response to the poll signal.

Step 3c: In the ranging control phase, the initiator device sends a first UWB signal to the responder device.

For related descriptions of the first UWB signal, refer to the descriptions of the first UWB signal in the embodiment shown in FIG. 6. Details are not described herein again.

Step 4c: The responder device sends a fifth UWB signal to the initiator device.

For related descriptions of the fifth UWB signal, refer to the descriptions of the fifth UWB signal in the embodiment shown in FIG. 6. Details are not described herein again.

Step 5c: The responder device sends first indication information to the initiator device.

In this implementation, a Resp message sent by the responder device and a UWB block number feedback message fed back by the responder device to the initiator device are not combined. In addition, the responder device first sends the Resp message, and then feeds back the UWB block number feedback message. This is applicable to a scenario in which the responder device needs more time to process a UWB test signal from the initiator device.

Step 6c: The initiator device sends second indication information to the responder device.

For related descriptions of the second indication information, refer to the descriptions of the second indication information in the embodiment shown in FIG. 6. Details are not described herein again.

Step 7c: The initiator device sends a second narrowband signal to the responder device.

For related descriptions of the second narrowband signal, refer to the descriptions of the second narrowband signal in the embodiment shown in FIG. 6. Details are not described herein again.

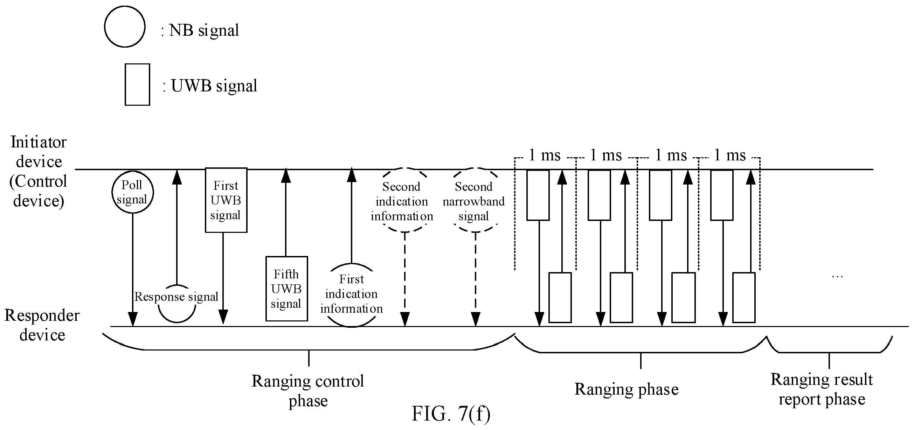

The foregoing step 1c to step 6c are shown in FIG. 7(f).

In another possible implementation, the following steps are included.

Step 1d: The initiator device sends a poll signal to the responder device.

For example, the poll signal indicates a sending sequence of a UWB test signal and a narrowband signal between the initiator device and the responder device in a ranging control phase.

For example, the poll signal may be understood as the first narrowband signal in the embodiment shown in FIG. 6.

Step 2d: In the ranging control phase, the initiator device sends a first UWB signal to the responder device.

For related descriptions of the first UWB signal, refer to the descriptions of the first UWB signal in the embodiment shown in FIG. 6. Details are not described herein again.

Step 3d: The responder device sends a fifth UWB signal to the initiator device.

Step 4d: The responder device sends, to the initiator device, a response signal in response to the poll signal.

For example, a response (Resp) message of the responder device for a poll message and a UWB block number feedback message fed back by the responder device to the initiator device are included in a same return message.

For related descriptions of the fifth UWB signal, refer to the descriptions of the fifth UWB signal in the embodiment shown in FIG. 6. Details are not described herein again.

Step 5d: The initiator device sends second indication information to the responder device.

For related descriptions of the second indication information, refer to the descriptions of the second indication information in the embodiment shown in FIG. 6. Details are not described herein again.

Step 6d: The initiator device sends a second narrowband signal to the responder device.

For related descriptions of the second narrowband signal, refer to the descriptions of the second narrowband signal in the embodiment shown in FIG. 6. Details are not described herein again.

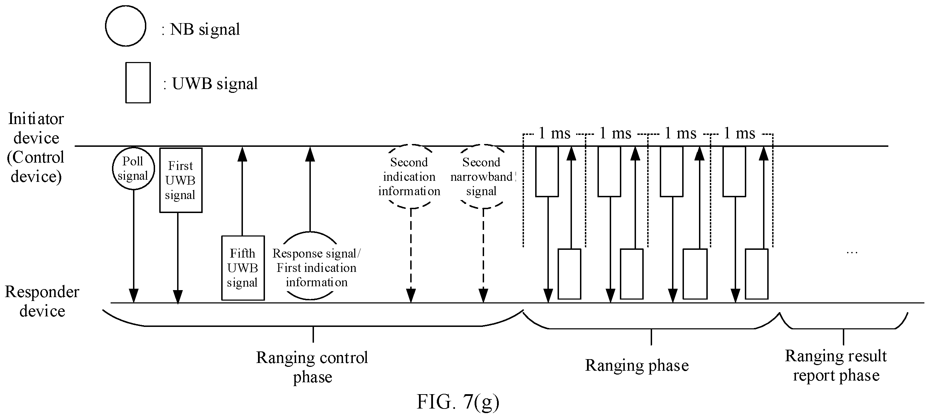

The foregoing step 1d to step 6d are shown in FIG. 7(g).

Similarly, when the transmit end device determines the number of fragment signals of the second UWB signal based on the first indication information sent by the receive end device and/or the UWB test signal sent by the receive end, a case in which the transmit end device is the ranging responder device, the receive end device is the ranging initiator device, and the transmit end device is the control device in the ranging procedure is similar to a case in which the transmit end device is the ranging initiator device, the receive end device is the ranging responder device, and the initiator device is the control device in the ranging procedure. For example, the device that sends the first indication information and/or the first UWB signal in FIG. 7(d) to FIG. 7(g) is replaced with the initiator device, and the device that sends the fifth UWB signal is replaced with the responder device. In this case, a case in which the Resp message and the first indication information are combined for sending does not occur.

In addition, FIG. 7(d) to FIG. 7(g) show cases in which the initiator device is the control device. If the responder device is a control device, the initiator device needs to return, to the responder device, a fifth number, of fragment signals of a UWB signal, determined based on the fifth UWB signal, and the responder device finally determines the number of fragment signals of the UWB signal based on the first UWB signal and received information indicating the fifth number, and notifies the initiator device by using a notification message.

The foregoing embodiments are described by using a one-to-one case as an example, that is, one initiator device and one responder device. It should be noted that the signaling transmission method shown in FIG. 6 may also be extended to a one-to-many or many-to-many case, that is, one initiator device and a plurality of responder devices, or a plurality of initiator devices and a plurality of responder devices.

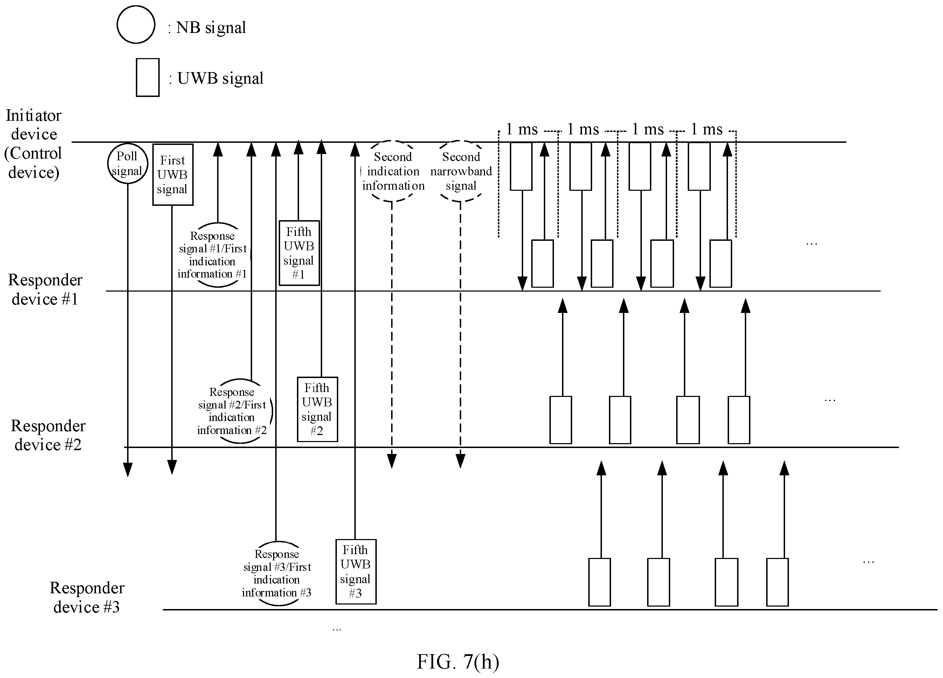

For example, the one-to-many case is shown in FIG. 7(h).

A poll message in a ranging control phase may be used to schedule and indicate, in the ranging control phase, a sending sequence of a plurality of UWB test signals and a plurality of narrowband signals between the initiator device and the plurality of responder devices.

For example, slots occupied by the initiator device to send the UWB test signals and the narrowband signals are indicated, and slots occupied by the plurality of responder devices to send the plurality of UWB test signals and the plurality of narrowband signals are indicated.

In a possible implementation, the initiator device may send a notification message in the ranging control phase, to notify a number of fragment signals of a second UWB signal in a measurement phase.

Optionally, a notification message in the ranging control phase may alternatively be used to schedule and indicate a sending sequence of fragment signals of a plurality of second UWB signals between the initiator device and the plurality of responder devices in a subsequent measurement phase.

For example, the notification message indicates slots occupied by the initiator device and the plurality of responder devices to send the fragment signals.

The following uses an example to describe in the one-to-many case, how the initiator device determines the number of fragment signals of the second UWB signal transmitted in the measurement phase.

It is assumed that there are N responder devices, and a number of fragment signals generated by each responder device is estimated to be sequentially $F_1, F_2 \ldots F_N$.

In a case in which the transmit end device determines the number of fragment signals of the second UWB signal based on numbers of fragment signals fed back by the responder devices:

The transmit end device may use a maximum value in $F_1, F_2 \ldots F_N$ as the number of fragment signals of the second UWB signal in the measurement phase.

In a case in which the transmit end device determines the number of fragment signals of the second UWB signal based on numbers of fragment signals fed back by the responder devices and numbers of fragment signals estimated by the transmit end device,

Corresponding to UWB test signals (for example, a plurality of fifth UWB signals) sent by the plurality of responder devices, the transmit end device correspondingly sets numbers of pluralities fragment signals, denoted as $F_{N+1}, F_{N+2} \ldots F_{2N}$. A simple method for determining the final number of fragment signals of the second UWB signal is that a maximum number of fragment signals in $F_1, F_2 \ldots F_N$ and $F_{N+1}, F_{N+2} \ldots F_{2N}$ is used as the number of fragment signals of the second UWB signal, that is:

$$\text{Number of fragment signals of the second UWB signal} = \max(F_1, F_2 \ldots F_{2N})$$

In the many-to-many case, for a method for determining a number of fragment signals of a second UWB signal by each initiator device, refer to the foregoing one-to-many case. That is, the many-to-many case may be understood as a plurality of one-to-many cases, and details are not described herein again.

It can be learned from the foregoing that, in the embodiment shown in FIG. 6, in the ranging control phase, the number of UWB blocks may be estimated based on quality of the UWB test signal. Compared with an existing solution in which estimation is performed based on a narrowband NB signal, this solution is more accurate, reduces a probability of incorrectly configuring the number of UWB blocks, and avoids or reduces a probability of system efficiency reduction.

In addition, the embodiment shown in FIG. 6 can avoid or reduce a probability that on-time periods of receivers of a receive end/transmit end device are improperly configured, further avoid or reduce a probability that power is consumed excessively fast because the receive end/transmit end device cannot effectively sleep, and further avoid or reduce a probability that work duration of the receive end/transmit end device is reduced.

In addition, this application further provides another signaling transmission method, to adjust an inappropriate number of UWB blocks to an appropriate number of UWB blocks in time based on actual measurement effect of a current ranging round. This avoids a waste of a large amount of time in subsequent consecutive ranging processes, and improves system efficiency. The following describes the signaling transmission method in detail with reference to the accompanying drawings.

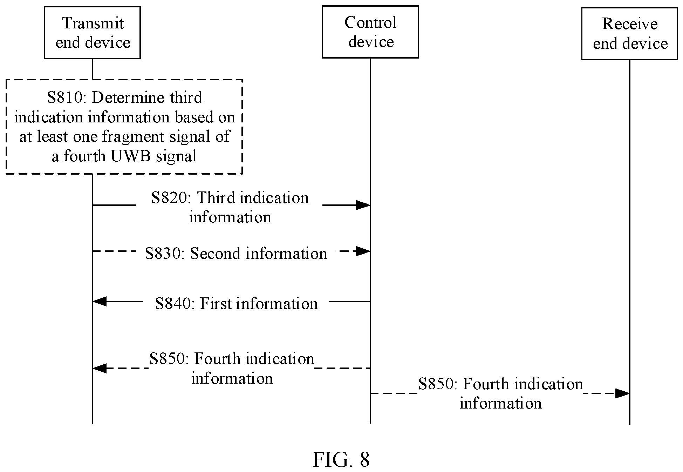

Unless otherwise specified, detailed descriptions of some technical features in an embodiment may also be used to explain corresponding technical features mentioned in another embodiment. For example, the specific description of the fragment signals of the UWB signal in the embodiment shown in FIG. 6 may be applied to an embodiment shown in FIG. 8, and a concept of the fragment signal may not be described in detail in the embodiment shown in FIG. 8. For another example, in the embodiment shown in FIG. 6, the specific description of determining the number of fragment signals of the UWB signal based on the confidence level of the UWB signal may be applied to the embodiment shown in FIG. 8. Examples are not described herein again one by one.

FIG. 8 is a schematic flowchart of another signaling transmission method according to this application. The method includes the following steps.

S810: A transmit end device determines third indication information based on at least one fragment signal of a fourth UWB signal.

The third indication information indicates a third number of fragment signals of a third UWB signal. The fourth UWB signal is a UWB signal that is for measurement (for example, sensing or ranging) and that is transmitted in a current measurement round. The UWB signal is divided into a plurality of fragment signals for transmission in a transmission process. The transmit end device is a device that receives the plurality of fragment signals.

In this embodiment, the transmit end device may determine actual measurement effect of the current measurement round based on quality of the received fragment signals, and determine that a number of fragment signals of a current UWB signal is no longer appropriate, and the number of fragment signals of the UWB signal needs to be changed (or updated).

In a possible implementation, the transmit end device may determine the third indication information based on any fragment signal of the received fourth UWB signal.

For example, the transmit end device determines the third indication information based on quality of any fragment signal in the received plurality of fragment signals. For a specific manner of determining a number of fragment signals of a to-be-transmitted UWB signal based on quality of a UWB signal, refer to the description of "determining the first indication information based on the first UWB signal" in the embodiment shown in FIG. 6. Details are not described herein again.

In another possible implementation, the transmit end device may determine the third indication information based on the plurality of fragment signals of the received fourth UWB signal.

For example, the transmit end device determines the third indication information based on an average confidence level value of the received plurality of fragment signals.

It should be understood that the foregoing merely describes, by using an example, how to determine the third indication information based on the fragment signals, and does not constitute any limitation on the protection scope of this application.

S820: The transmit end device sends the third indication information to a control device, or a control device receives the third indication information from the transmit end device.

For example, the third indication information is transmitted through a narrowband. In other words, the third indication information may be a narrowband signal.

Similar to the foregoing first indication information, in a possible implementation, in this embodiment, the third indication information may be carried, by the transmit end device, in a predefined third information element and sent to the control device, where the third information element further includes a third address size specifier field and a third address field, the third address size specifier field indicates an address type of a device that receives the third information element, and the third address field indicates an address of the device that receives the third information element.

A format of the third information element is similar to a format of the first information element, and details are not described herein again.

Optionally, the transmit end device may send second information to the control device, to indicate to change a number of fragment signals of the third UWB signal. Optionally, a method procedure shown in FIG. 8 further includes the following step.

S830: The transmit end device sends the second information to the control device, or the control device receives the second information from the transmit end device.

The second information indicates that the number of fragment signals of the third UWB signal is changed. For example, the second information is triggered by using a ranging change request message (Ranging Change Request Information Element, RCR IE).

In a possible implementation, the RCR IE still uses an information element defined in a previous generation IEEE 802.15.4z standard, and the RCR IE is for triggering a ranging change request, including but not limited to a change of a ranging round parameter configuration, a change of a ranging block structure, and the like. In this implementation, an existing information element is reused to indicate a change of the number of fragment signals of the UWB signal. This can improve backward compatibility of the solution.

In another possible implementation, the RCR IE may be a newly defined information element, and indicates a change of the number of fragment signals of the UWB signal.

The RCR IE is not limited in this embodiment, and all information elements that can indicate the change of the number of fragment signals of the UWB signal fall within the protection scope of this application.

For example, the second information is transmitted through a narrowband, and the second information may be a narrowband signal.

Specifically, after receiving the third indication information, the control device may notify, by using first information, the transmit end device whether to agree to change the number of fragment signals of the third UWB signal. The method procedure shown in FIG. 8 further includes the following step.

S840: The control device sends the first information to the transmit end device, or the transmit end device receives the first information from the control device.

The first information indicates whether it is agreed to change the number of fragment signals of the third UWB signal.

For example, the first information is transmitted through a narrowband, and the first information may be a narrowband signal.

In a possible implementation, the first information indicates to agree to update the number of fragments of the third UWB signal.

For example, the first information is acknowledgment (ACK) information.

Optionally, in this implementation, after sending the acknowledgment information, the control device may further send fourth indication information to indicate the third number of fragment signals of the third UWB signal; or may further send fourth indication information to indicate a fourth number of fragment signals of the third UWB signal, where the fourth number is different from the third number.

For another example, the first information is fourth indication information.

Specifically, in this implementation, the control device may send the fourth indication information to both the transmit end device and a receive end device, so that the transmit end device and the receive end device can subsequently transmit the UWB signal based on a changed number of fragment signals of the UWB signal. Optionally, the method procedure shown in FIG. 8 further includes the following step.

S850: The control device sends the fourth indication information to the transmit end device and the receive end device, or the transmit end device and the receive end device receive the fourth indication information from the control device.

For example, the fourth indication information is transmitted through a narrowband, and the fourth indication information may be a narrowband signal.

Similar to the foregoing first indication information, in a possible implementation, in this embodiment, the fourth indication information may be carried, by the transmit end device, in a predefined fourth information element and sent to the control device, where the fourth information element further includes a fourth address size specifier field and a fourth address field, the fourth address size specifier field indicates an address type of a device that receives the fourth information element, and the fourth address field indicates an address of the device that receives the fourth information element.

A format of the fourth information element is similar to a format of the first information element, and details are not described herein again.

For example, the control device broadcasts the fourth information element.

For another example, the control device sends a fourth information element #1 to the transmit end device, and a fourth address size specifier field and/or a fourth address field in the fourth information element #1 indicate/indicates that a device that receives the fourth information element #1 is the transmit end device. The fourth information element #1 includes the fourth indication information. In addition, the control device sends a fourth information element #2 to the receive end device, and a fourth address size specifier field and/or a fourth address field in the fourth information element #2 indicate/indicates that a device that receives the fourth information element #2 is the receive end device. The fourth information element #2 includes the fourth indication information.

In another possible implementation, the first information indicates it is disagreed to update the number of fragment signals of the third UWB signal.

It should be understood that, in this embodiment, a case in which the control device agrees to update the number of fragment signals of the third UWB signal is mainly considered, and a case in which the control device disagrees to update the number of fragment signals of the third UWB signal is not described in this embodiment.

In a possible implementation, the transmit end device may send the first information and the third indication information to the control device in a measurement report phase of a first round. In this implementation, the control device may send the fourth indication information to the transmit end device and the receive end device in the measurement report phase of the first round; or

the control device may send the fourth indication information to the transmit end device and the receive end device before a measurement phase of a second round.

In this implementation, after receiving the fourth indication information, the transmit end device and the receive end device may transmit the third UWB signal based on the changed number of fragment signals in the measurement phase of the second round, where the second round is a measurement round after the first round. An inappropriate number of fragment signals may be adjusted to an appropriate number of fragment signals in time based on actual measurement effect of a current ranging round. This avoids a waste of a large amount of time in subsequent consecutive ranging processes, and improves system efficiency. In addition, this implementation can avoid or reduce a probability that on-time periods of receivers of a receive end/transmit end device are improperly configured, further avoid or reduce a probability that power is consumed excessively fast because the receive end/transmit end device cannot effectively sleep, and further avoid or reduce a probability that work duration of the receive end/transmit end device is reduced. It should be noted that, that the second round is the measurement round after the first round may be understood as that the second round is performed after the first round ends.

After the first round ends, performing of the second round includes the following two cases.

Case 1: The second round and the first round are two adjacent ranging rounds. Specifically, the second round may be performed immediately after the first round ends. It may be understood that an end moment of the first round is a start moment of the second round, or duration between an end moment of the first round and a start moment of the second round is less than a preset threshold, and another ranging round is not included in the duration.

Case 2: The second round and the first round are not adjacent ranging rounds. Specifically, the second round is not performed immediately after the first round ends. In other words, there may be a specific time interval between the second round and the first round. For example, there is another ranging round between the second round and the first round. It may be understood that duration between an end moment of the first round and a start moment of the second round is greater than a preset threshold.

A value of the preset threshold is not limited in embodiments of this application. For example, in Case 2, there may be an interval of a duration length of several rounds between the end moment of the first round and the start moment of the second round. The interval of the several rounds may be used in other ranging processes or may be idle.

For example, in Case 2, that the interval duration between the end moment of the first round and the start moment of the second round is greater than the preset threshold includes that the second round and the first round are not in a same ranging block. For example, the first round is a ranging round in a current ranging block, and the second round is a ranging round in a next ranging block (for example, a ranging block adjacent to the current ranging block). In this case, there is an interval of a duration length of several rounds between the second round and the first round. The interval of the several rounds may be used in other ranging processes or may be idle. For another example, the first round is a ranging round in a current ranging block, and the second round may be a ranging round in a subsequent ranging block (for example, a ranging block that is at least one ranging block apart from the current ranging block).

The foregoing ranging block may be understood as a time length including one or more ranging rounds.

In another possible implementation, the transmit end device may send the first information and the third indication information to the control device at a first moment in the measurement phase of the first round. In this implementation, the control device may send the fourth indication information to the transmit end device and the receive end device before the measurement phase of the second round; or

the control device may send the fourth indication information to the transmit end device and the receive end device at a second moment in the measurement phase of the first round.

The third UWB signal includes a UWB signal transmitted in the measurement phase of the second round and/or a UWB signal transmitted after the second moment in the measurement phase of the first round, and the second moment is later than the first moment.

In this implementation, after receiving the fourth indication information, the transmit end device and the receive end device may transmit the third UWB signal based on the changed number of fragment signals in the measurement phase of the second round, where the second round is a measurement round after the first round; or after receiving the fourth indication information, the transmit end device and the receive end device may transmit the third UWB signal based on the changed number of fragment signals after the second moment in the measurement phase of the first round. An inappropriate number of fragment signals may be adjusted to an appropriate number of fragment signals in time based on actual measurement effect of the current ranging round. This avoids a waste of a large amount of time in remaining time of the measurement phase of the current ranging round and in subsequent consecutive ranging processes, and improves system efficiency. In addition, this implementation can avoid or reduce a probability that on-time periods of receivers of a receive end/transmit end device are improperly configured, further avoid or reduce a probability that power is consumed excessively fast because the receive end/transmit end device cannot effectively sleep, and further avoid or reduce a probability that work duration of the receive end/transmit end device is reduced. In the procedure shown in FIG. 8, the receive end device may be a measurement initiator device, or may be a measurement responder device; or the initiator device and the control device are a same device, and the responder device and the control device are a same device. The following describes, with reference to specific examples, the procedure of the signaling transmission method provided in this application when the receive end device plays different roles in the ranging process.

Example 4: The transmit end device is a ranging initiator device, the receive end device is a ranging responder device, and a control device is further included. The control device may be understood as a device for determining a related parameter in the ranging procedure.

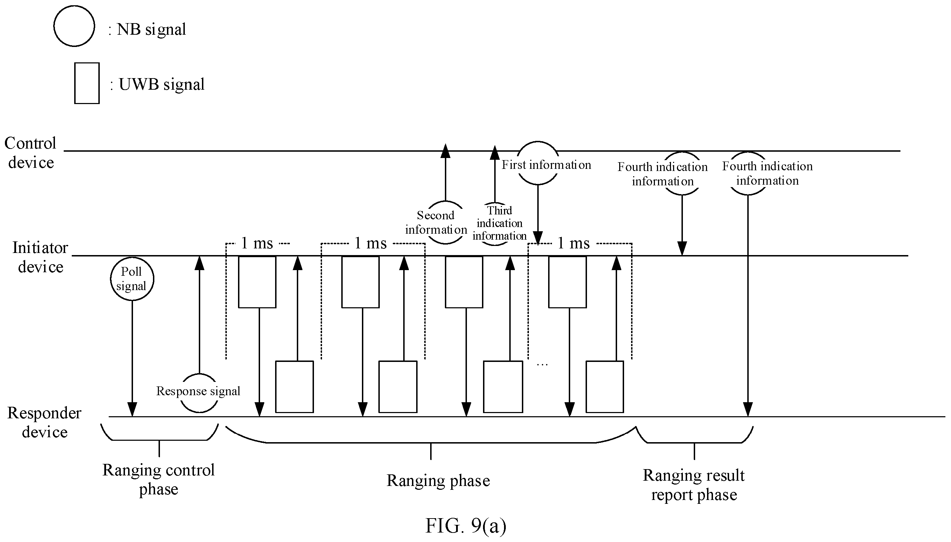

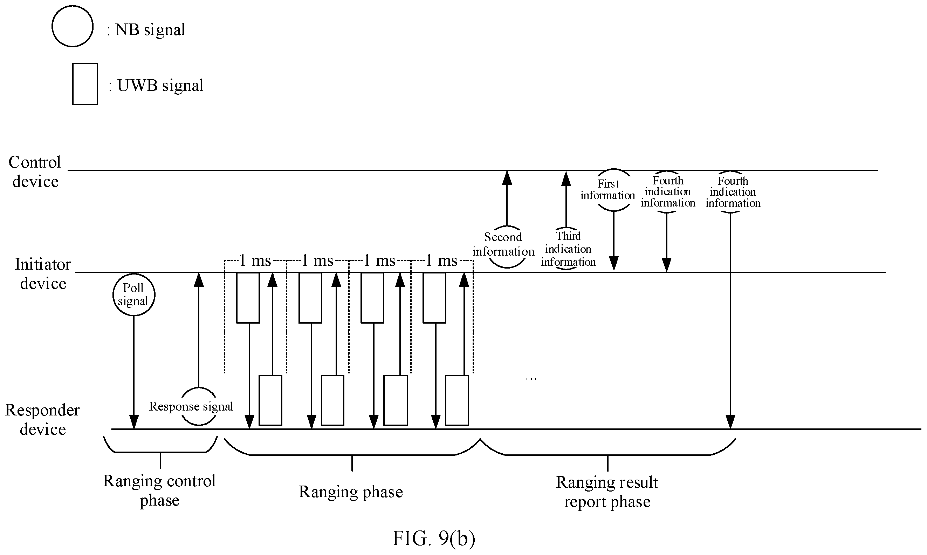

FIG. 9(a) and FIG. 9(b) are schematic flowcharts corresponding to Example 4, and the following steps are included.

Step 1: The initiator device sends a poll signal to the responder device.

Step 2: The responder device sends, to the initiator device, a response signal in response to the poll signal.

Step 3: Transmit UWB ranging signals between the initiator device and the responder device, and perform ranging.

For differentiation, a UWB ranging signal sent by the initiator device to the responder device in a ranging phase is denoted as a fourth UWB signal #1, and a UWB ranging signal sent by the responder device to the initiator device is denoted as a fourth UWB signal #2. In the case of Example 4, the fourth UWB signal in the embodiment shown in FIG. 8 is the fourth UWB signal #2.

The initiator device determines third indication information based on the received fragment signals of the fourth UWB signal #2.

Step 4: The initiator device sends second information and the third indication information to the control device.

Step 4 includes two possibilities.

Possibility 1: The initiator device sends the second information and the third indication information in a current ranging phase, as shown in FIG. 9(a).

Possibility 2: The initiator device sends the second information and the third indication information in a ranging report phase, as shown in FIG. 9(b).

Step 5: The control device sends first information to the initiator device.

Step 6: The control device sends fourth indication information to the initiator device and the responder device.

Specifically, after receiving the third indication information, the control device sends the fourth indication information to the initiator device and the responder device. The following several possibilities are included.

When the initiator device sends the second information and the third indication information in the current ranging phase, the control device may send the fourth indication information to the initiator device and the responder device in the current ranging phase; or start to send the fourth indication information to the initiator device and the responder device before a ranging phase of a next ranging round starts (for example, a ranging result report phase of a current ranging round or a control phase of the next ranging round). In FIG. 9(a), an example in which the fourth indication information is sent to the initiator device and the responder device in the ranging result report phase of the current ranging round is used for illustration. The next ranging round may be a ranging round adjacent to the current ranging round, or may be a ranging round that is at least one ranging round apart from the current ranging round.

When the initiator device sends the second information and the third indication information in the ranging report phase of a current ranging round, the control device may send the fourth indication information to the initiator device and the responder device in the ranging report phase of the current ranging round, or start to send the fourth indication information to the initiator device and the responder device before a ranging phase of a next ranging round starts (for example, a control phase of the next ranging round). In FIG. 9(b), an example in which the fourth indication information is sent to the initiator device and the responder device in the ranging result report phase of the current ranging round is used for illustration.

After step 1 to step 6, the initiator device and the responder device may transmit a UWB ranging signal based on a determined number of fragment signals of the UWB ranging signal to perform a subsequent procedure of the UWB ranging.

For example, the fourth indication information indicates that the number of fragment signals of the UWB ranging signal is 8. In one possibility, after receiving the fourth indication information, the initiator device and the responder device directly use, in a time period after a number of fragment signals in the ranging phase of the current ranging round is changed, a changed number of fragment signals to perform ranging. In another possibility, after receiving the fourth indication information, the initiator device and the responder device use, in the next UWB ranging round, a changed number of fragment signals to perform UWB ranging.

Example 5: The transmit end device is a ranging responder device, the receive end device is a ranging initiator device, and a control device is further included.

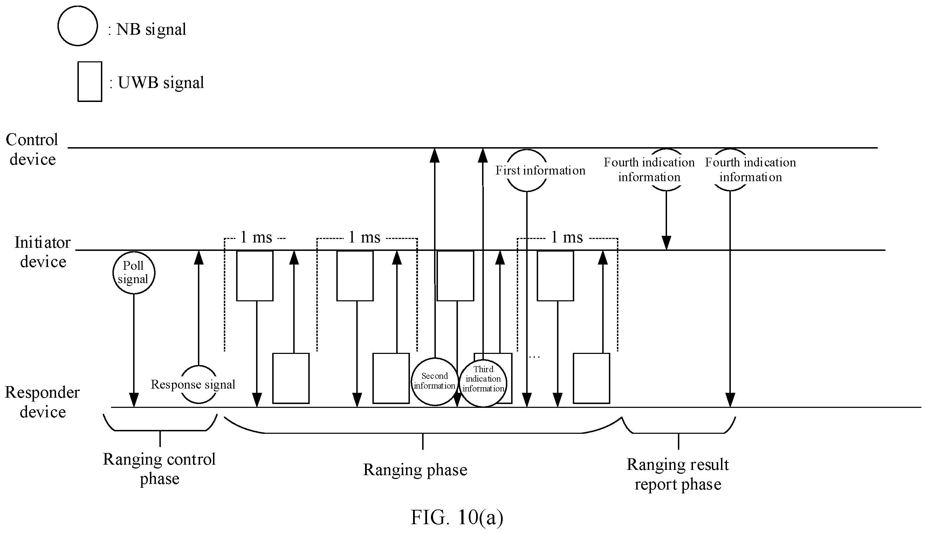

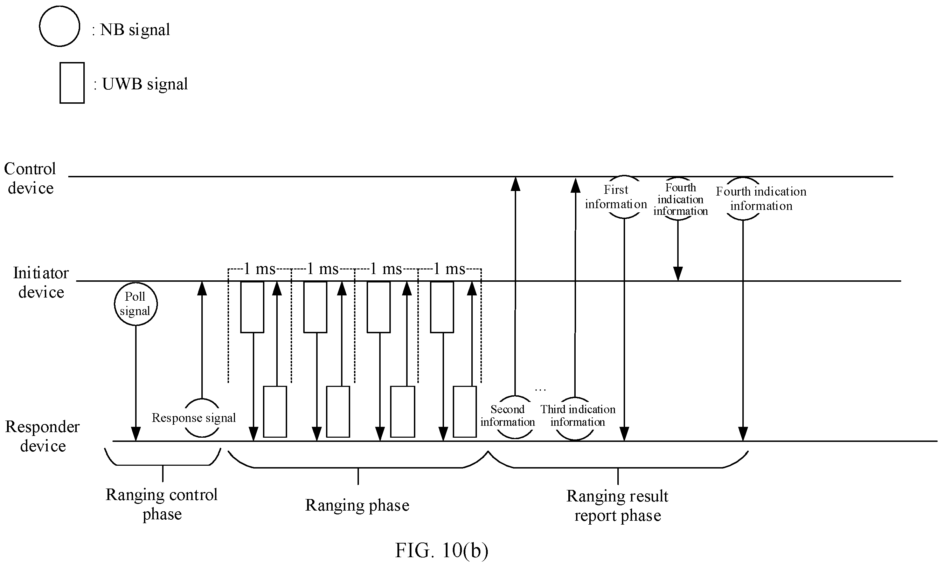

FIG. 10(a) and FIG. 10(b) are schematic flowcharts corresponding to Example 4, and the following steps are included.

Step 1: The initiator device sends a poll signal to the responder device.

Step 2: The responder device sends, to the initiator device, a response signal in response to the poll signal.

Step 3: Transmit UWB ranging signals between the initiator device and the responder device, and perform ranging.

For differentiation, a UWB ranging signal sent by the initiator device to the responder device in a ranging phase is denoted as a fourth UWB signal #1, and a UWB ranging signal sent by the responder device to the initiator device is denoted as a fourth UWB signal #2. In the case of Example 5, the fourth UWB signal in the embodiment shown in FIG. 8 is the fourth UWB signal #1.

The responder device determines third indication information based on the received fragment signals of the fourth UWB signal #1.

Step 4: The responder device sends second information and the third indication information to the control device.

Step 4 includes two possibilities.

Possibility 1: The responder device sends the second information and the third indication information in a current ranging phase, as shown in FIG. 10(a).

Possibility 2: The responder device sends the second information and the third indication information in a ranging report phase, as shown in FIG. 10(b).

Step 5: The control device sends first information to the responder device.

Step 6: The control device sends fourth indication information to the initiator device and the responder device.

Specifically, after receiving the third indication information, the control device sends the fourth indication information to the initiator device and the responder device. The following several possibilities are included.

When the initiator device sends the second information and the third indication information in the current ranging phase, the control device may send the fourth indication information to the initiator device and the responder device in the current ranging phase; or start to send the fourth indication information to the initiator device and the responder device before a ranging phase of a next ranging round starts (for example, a ranging result report phase of a current ranging round or a control phase of the next ranging round). In FIG. 10(a), an example in which the fourth indication information is sent to the initiator device and the responder device in the ranging result report phase of the current ranging round is used for illustration.

When the initiator device sends the second information and the third indication information in the ranging report phase of a current ranging round, the control device may send the fourth indication information to the initiator device and the responder device in the ranging report phase of the current ranging round, or start to send the fourth indication information to the initiator device and the responder device before a ranging phase of a next ranging round starts (for example, a control phase of the next ranging round). In FIG. 10(b), an example in which the fourth indication information is sent to the initiator device and the responder device in the ranging result report phase of the current ranging round is used for illustration.

After step 1 to step 6, the initiator device and the responder device may transmit a UWB ranging signal based on a determined number of fragment signals of the UWB ranging signal to perform a subsequent procedure of the UWB ranging.

Example 6: The transmit end device is a ranging initiator device, the receive end device is a ranging responder device, and the initiator device is a control device in the ranging procedure.

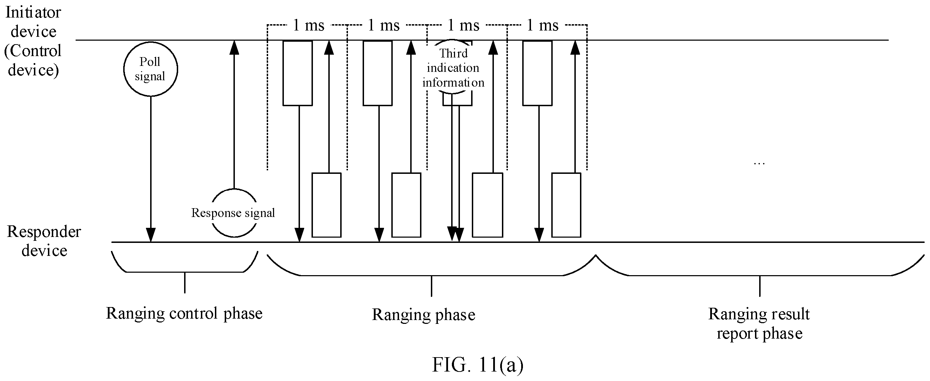

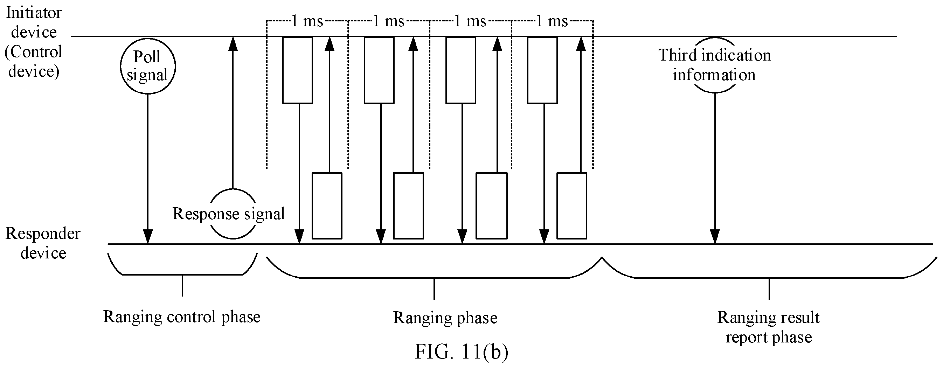

FIG. 11(a) and FIG. 11(b) are schematic flowcharts corresponding to Example 6, and the following steps are included.

Step 1: The initiator device sends a poll signal to the responder device.

Step 2: The responder device sends, to the initiator device, a response signal in response to the poll signal.

Step 3: Transmit UWB ranging signals between the initiator device and the responder device, and perform ranging.

For differentiation, a UWB ranging signal sent by the initiator device to the responder device in a ranging phase is denoted as a fourth UWB signal #1, and a UWB ranging signal sent by the responder device to the initiator device is denoted as a fourth UWB signal #2. In the case of Example 4, the fourth UWB signal in the embodiment shown in FIG. 8 is the fourth UWB signal #2.

The initiator device determines third indication information based on the received fragment signals of the fourth UWB signal #2.

Step 4: The initiator device sends the third indication information to the responder device.

Step 4 includes two possibilities.

Possibility 1: The initiator device sends the third indication information in a current ranging phase, as shown in FIG. 11(a).

Possibility 2: The initiator device sends the third indication information in a ranging report phase, as shown in FIG. 11(b).

After step 1 to step 4, the initiator device and the responder device may transmit a UWB ranging signal based on a determined number of fragment signals of the UWB ranging signal to perform a subsequent procedure of the UWB ranging.

For example, when the initiator device sends the third indication information in the current ranging phase, after receiving the third indication information, the responder device directly uses, in a time period after a number of fragment signals in the ranging phase of the current ranging round is changed, a changed number of fragment signals to perform ranging. In another possibility, the initiator device and the responder device use, in the next UWB ranging round, a changed number of fragment signals to perform UWB ranging.

For another example, when the initiator device sends the third indication information in the ranging report phase, the initiator device and the responder device use a changed number of fragment signals in a next UWB ranging round to perform UWB ranging.

Example 7: The transmit end device is a ranging initiator device, the receive end device is a ranging responder device, and the responder device is a control device in the ranging procedure.

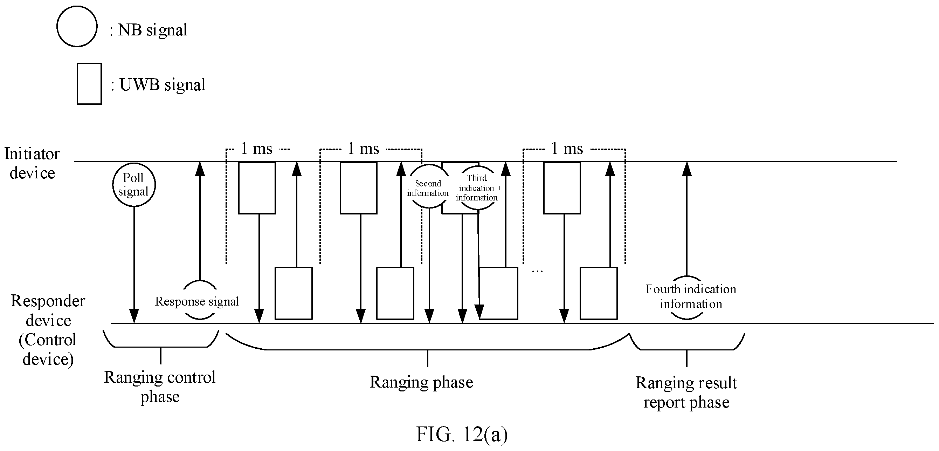

FIG. 12(a) to FIG. 12(g) are schematic flowcharts corresponding to Example 7, and the following steps are included.

Step 1: The initiator device sends a poll signal to the responder device.

Step 2: The responder device sends, to the initiator device, a response signal in response to the poll signal.

Step 3: Transmit UWB ranging signals between the initiator device and the responder device, and perform ranging.

For differentiation, a UWB ranging signal sent by the initiator device to the responder device in a ranging phase is denoted as a fourth UWB signal #1, and a UWB ranging signal sent by the responder device to the initiator device is denoted as a fourth UWB signal #2. In the case of Example 4, the fourth UWB signal in the embodiment shown in FIG. 8 is the fourth UWB signal #2.

The initiator device determines third indication information based on the received fragment signals of the fourth UWB signal #2.

Step 4: The initiator device sends second information and the third indication information to the responder device.

Step 4 includes two possibilities.

Possibility 1: The initiator device sends the second information and the third indication information in a current ranging phase, as shown in FIG. 12(a).

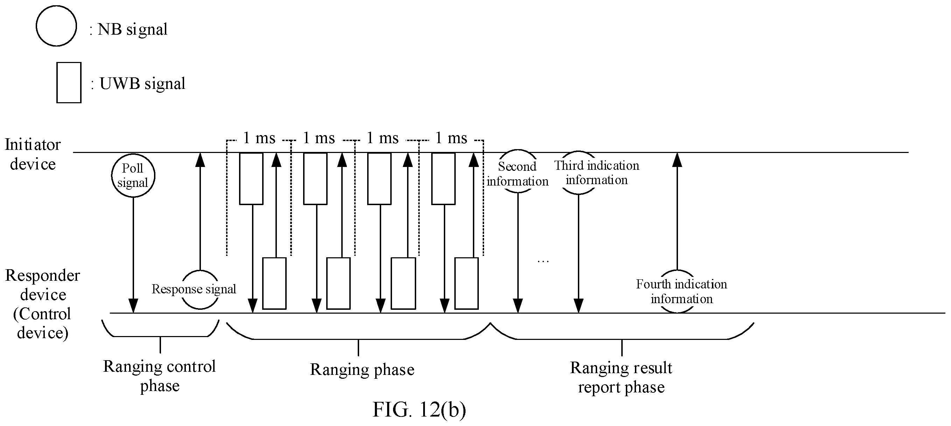

Possibility 2: The initiator device sends the second information and the third indication information in a ranging report phase, as shown in FIG. 12(b).

Step 5: The responder device sends fourth indication information to the initiator device.

Specifically, after receiving the third indication information, the responder device sends the fourth indication information to the initiator device. The following several possibilities are included.

When the initiator device sends the second information and the third indication information in the current ranging phase, the responder device may send the fourth indication information to the initiator device in the current ranging phase; or start to send the fourth indication information to the initiator device before a ranging phase of a next ranging round starts (for example, a ranging result report phase of a current ranging round or a control phase of the next ranging round). In FIG. 12(a), an example in which the fourth indication information is sent to the initiator device and the responder device in the ranging result report phase of the current ranging round is used for illustration.

When the initiator device sends the second information and the third indication information in the ranging report phase of a current ranging round, the responder device may send the fourth indication information to the initiator device in the ranging report phase of the current ranging round, or start to send the fourth indication information to the initiator device before a ranging phase of a next ranging round starts (for example, a control phase of the next ranging round). In FIG. 12(b), an example in which the fourth indication information is sent to the initiator device and the responder device in the ranging result report phase of the current ranging round is used for illustration.

After step 1 to step 5, the initiator device and the responder device may transmit a UWB ranging signal based on a determined number of fragment signals of the UWB ranging signal to perform a subsequent procedure of the UWB ranging.

Alternatively, when the receive end device is a ranging responder device, and the responder device is a control device in the ranging process, the control device may directly indicate a number of fragment signals of a UWB ranging signal, and the number of fragment signals of the UWB ranging signal does not need to be determined based on third indication information sent by the initiator device. For example, after step 1 and step 3 are performed, the following steps are performed:

Step 4a: The responder device sends fourth indication information to the initiator device.

Step 4a includes two possibilities.

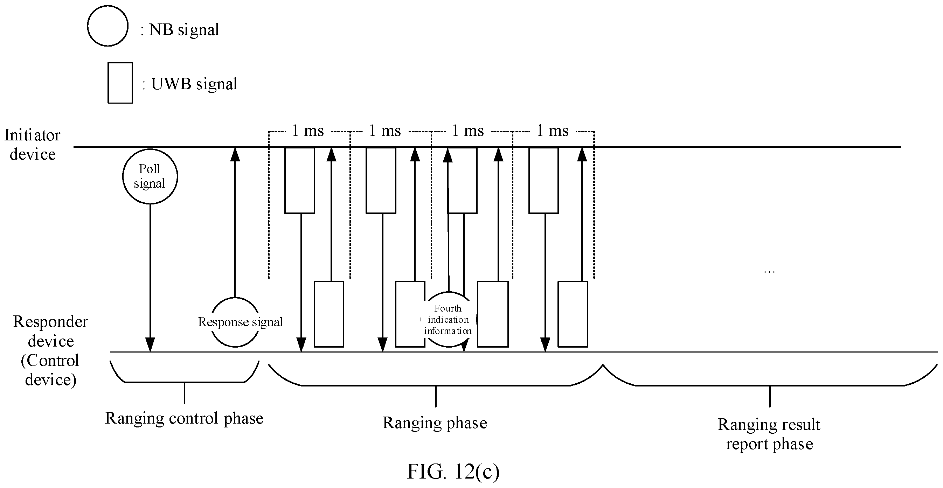

Possibility 1: The responder device sends the fourth indication information in a current ranging phase, as shown in FIG. 12(c).

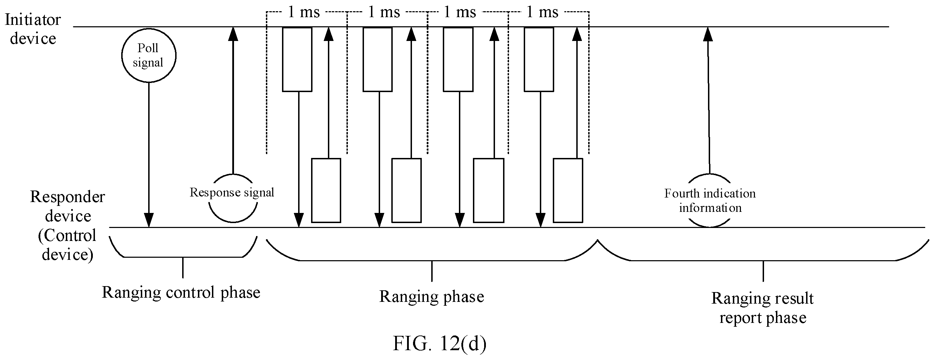

Possibility 2: The responder device sends the fourth indication information in a ranging report phase, as shown in FIG. 12(d).

After step 1 to step 4a, the initiator device and the responder device may transmit the UWB ranging signal based on the determined number of fragment signals of the UWB ranging signal to perform the subsequent procedure of the UWB ranging.

In the procedures shown in FIG. 6 and FIG. 8, how to determine, based on the UWB test signal, the number of fragment signals of the UWB signal transmitted in the measurement phase and how to indicate the number of fragment signals of the UWB signal are described in detail.

In a possible implementation, that the transmit end device determines the number of fragment signals of the UWB signal transmitted in the measurement phase is a procedure that does not need to be triggered.

In another possible implementation, that the transmit end device determines the number of fragment signals of the UWB signal transmitted in the measurement phase is a procedure triggered based on a trigger request sent by the receive end device. For example, the transmit end device may be a control device.

For example, the receive end device is a ranging responder device, and the transmit end device is a ranging initiator device. In a measurement report phase of a first round, if the responder device needs to change a number of fragment signals of a UWB signal transmitted in a measurement phase in a subsequent round (for example, a second round), at least one of the following information is carried in a report message (for example, a narrowband signal) related to a ranging result and returned to the transmit end device:

a change request message, an updated number of fragment signals (for example, the FFNE IE message described above), information related to the change of the number of fragment signals of the UWB signal, or the like. The change request message indicates to change the number of fragment signals of the UWB signal. For example, the change request message may be the RCR IE described above.

That is, the information related to the change of the number of fragment signals of the UWB signal and a report message related to the ranging result and returned by the responder device to the initiator device may be combined for reporting in one message.

For another example, in a measurement phase of a first round, if the receive end device needs to change a number of fragment signals of the UWB signal transmitted in a measurement phase of a subsequent round (for example, a second round), the receive end device may send a change request message (for example, may be a narrowband signal) to the transmit end device, where the change request message is used to request to change the number of fragment signals of the UWB signal transmitted in the measurement phase of the subsequent round (for example, the second round), and the change request message includes at least one piece of the following information:

a change request message, an updated number of fragment signals (for example, the FFNE IE message described above), information related to the change of the number of the UWB blocks, or the like. The change request message indicates to change the number of fragment signals of the UWB signal. For example, the change request message may be the RCR IE described above.

That is, the information related to the number of fragment signals of the UWB signal is transmitted in a process of the measurement phase, that is, the information and the report message related to a ranging result do not need to be combined for transmission. For example, a sequence of sending slots of the change request message and the UWB signal sent by the receive end device to the transmit end device may be interchanged, to be applicable to different scenarios.

For example, the change request message is sent after the receive end device sends the UWB signal to the transmit end device, which is applicable to a scenario in which the receive end device needs more time to process the fragment signals of the UWB signal from the initiator. For another example, the change request message is sent before the receive end device sends the UWB signal to the transmit end device, which is applicable to a scenario in which the receive end device needs to quickly respond to the transmit end device.

In addition, it should be noted that the foregoing procedure of triggering, by the receive end device, update of the number of fragment signals of the UWB signal is applicable to another scenario, that is, the triggering procedure may be independent. For example, a manner of determining the number of fragment signals of the UWB signal before a change request is not limited. When the receive end device needs to change the number of fragment signals of the UWB signal, the trigger procedure may be used to trigger update of the number of fragment signals of the UWB signal.

For example, a manner of determining the number of fragment signals of the UWB signal before a change request may be the foregoing manner of determining the number of fragment signals of the UWB signal based on the UWB test signal in the ranging control phase, or may be another existing or future manner of determining the number of fragment signals of the UWB signal.

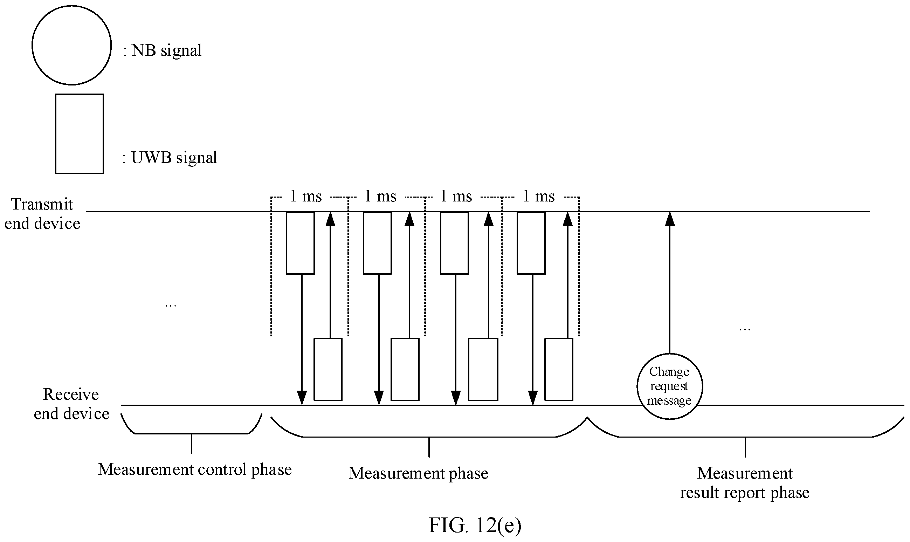

For ease of understanding, with reference to FIG. 12(e) to FIG. 12(g), procedures in which the receive end device triggers update of the number of fragment signals of the UWB signal are described in detail.

Possibility 1: The receive end device sends the change request message to the transmit end device in the measurement result report phase of the current measurement round, to trigger update of the number of fragment signals of the UWB signal in a next measurement round.

In Possibility 1, the change request message may be carried in a report message related to the ranging result, as shown in FIG. 12(e).

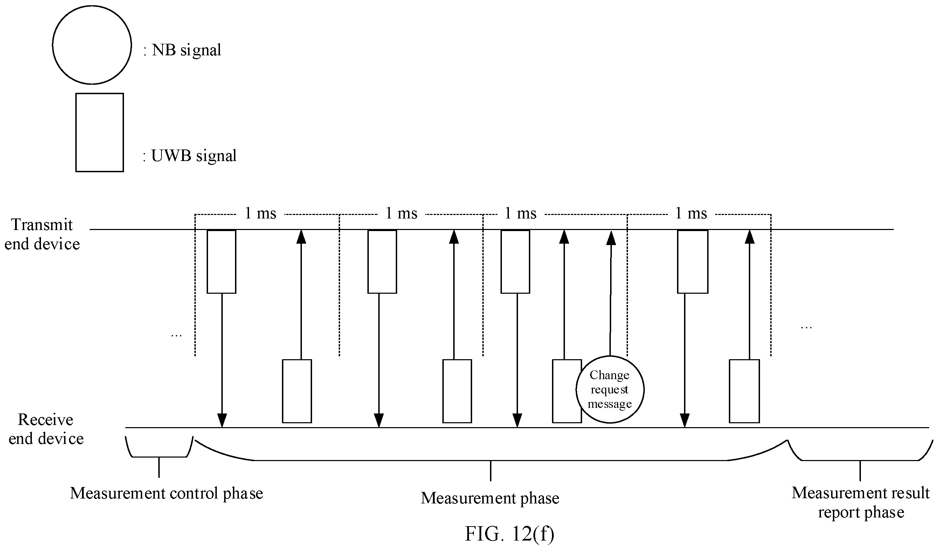

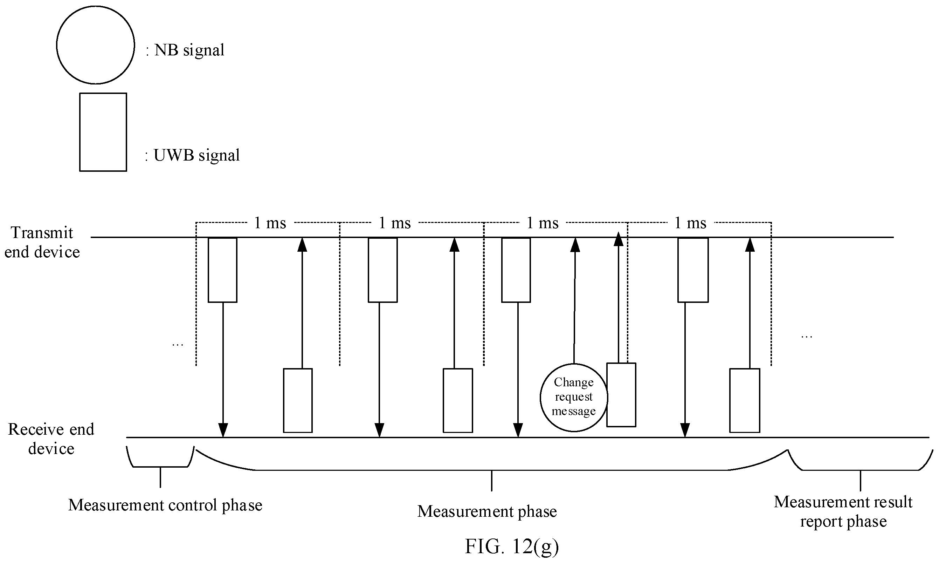

Possibility 2: The receive end device sends the change request message to the transmit end device in the measurement phase of the current measurement round, to trigger update of the number of fragment signals of the UWB signal in a next measurement round, as shown in FIG. 12(f) and FIG. 12(g).

It can be learned from cases shown in FIG. 12(f) and FIG. 12(g) that the sequence of sending slots of the change request message and the UWB signal sent by the receive end device to the transmit end device may be interchanged.

In the procedures of triggering update of the number of fragment signals of the UWB signal shown in FIG. 12(e) to FIG. 12(g), the receive end device is a responder device, and the transmit end device is an initiator device; or the receive end device is an initiator device, and the transmit end device is a responder device. In addition, in cases shown in FIG. 12(e) to FIG. 12(g), the transmit end device is a control device. Alternatively, the control device may be a third party or the receive end device, and a procedure is similar to those in FIG. 12(e) to FIG. 12(g), and details are not described again.

It should be noted that, the foregoing procedure of triggering update of the number of fragment signals of the UWB signal may be used in combination with the foregoing procedure of determining the number of fragment signals of the UWB signal.

For example, in the case shown in FIG. 6 or FIG. 8, in the measurement result report phase and/or the measurement phase of a previous measurement round before the number of fragment signals of the UWB signal is determined in the current measurement round, the transmit end device receives the change request message from the receive end device. For example, before step S611, the transmit end device receives the change request message from the receive end device; or

after the number of fragment signals of the UWB signal is determined in the current measurement round, in the measurement result report phase and/or the measurement phase of the current measurement round, the receive end device sends the change request message to the transmit end device, so as to update the number of fragment signals of the UWB signal transmitted in the next measurement round. For example, after step S632, the receive end device sends the change request message to the transmit end device.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device (for example, the initiator device and the responder device) in a conventional network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the method and the operation implemented by the device (for example, the initiator device and the responder device) may also be implemented by a component (for example, a chip or a circuit) of the device.

The foregoing describes in detail the signaling transmission method provided in embodiments of this application with reference to FIG. 6 and FIG. 8. The signaling transmission method is mainly described from a perspective of interaction between the transmit end device and the receive end device. It may be understood that, to implement the foregoing functions, the transmit end device and the receive end device include corresponding hardware structures and/or software modules for performing the functions.

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

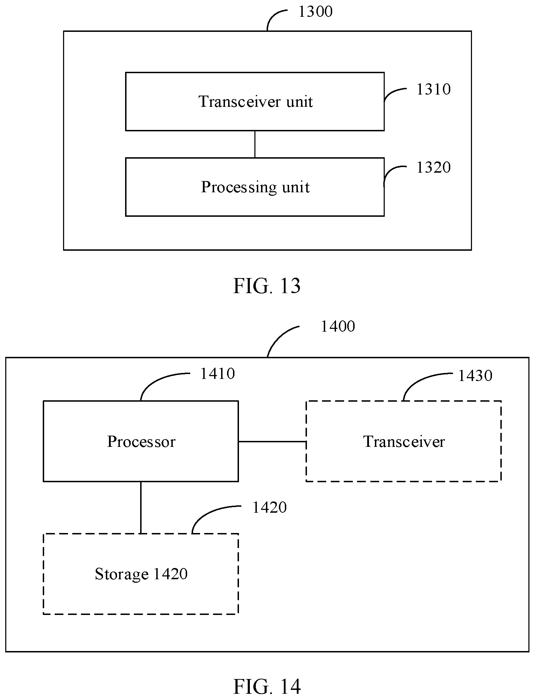

The following describes in detail signaling transmission apparatuses provided in embodiments of this application with reference to FIG. 13 and FIG. 14. It should be understood that descriptions of apparatus embodiments correspond to the descriptions of the method embodiments. Therefore, for content that is not described in detail, refer to the foregoing method embodiments. For brevity, a part of content is not described again.

In embodiments of this application, functional modules of a transmit end device or a receive end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used. Descriptions are provided below by using an example in which each functional module is obtained through division based on each corresponding function.

FIG. 13 is a block diagram of a signaling transmission apparatus according to an embodiment of this application. As shown in FIG. 13, the apparatus 1300 may include a transceiver unit 1310 and a processing unit 1320. The transceiver unit 1310 may communicate with the outside, and the processing unit 1320 is configured to process data. The transceiver unit 1310 may also be referred to as a communication interface or a communication unit.

Optionally, the apparatus 1300 may further include a storage unit. The storage unit may be configured to store instructions and/or data. The processing unit 1320 may read the instructions and/or the data in the storage unit, so that the apparatus implements the foregoing method embodiment.

The apparatus 1300 may be configured to perform actions performed by a transceiver device (for example, the transmit end device and the receive end device) in the foregoing method embodiment. In this case, the apparatus 1300 may be the transceiver device or a component that can be configured in the transceiver device. The transceiver unit 1310 is configured to perform receiving and sending related operations of the transceiver device in the foregoing method embodiment, and the processing unit 1320 is configured to perform processing related operations of the transceiver device in the foregoing method embodiment.

In a design, the apparatus 1300 is configured to perform actions performed by the transmit end device in the foregoing method embodiment.

In a possible implementation, the transceiver unit 1310 is configured to send a first UWB signal to a receive end device, where the first UWB signal is used to determine first indication information, and the first indication information indicates a first number of fragment signals of a second UWB signal; and the transceiver unit 1310 is configured to receive the first indication information from the receive end device.

In another possible implementation, the transceiver unit 1310 is configured to send third indication information to a control device, where the third indication information indicates a third number of fragment signals of a third UWB signal; and the transceiver unit 1310 is configured to receive first information from the control device, where the first information indicates whether it is agreed to change a number of fragment signals of the third UWB signal to the third number; and the third indication information is determined based on at least one fragment signal of a fourth UWB signal.

The apparatus 1300 may implement steps or procedures performed by the transmit end device in the method embodiments according to embodiments of this application. The apparatus 1300 may include units configured to perform the methods performed by the transmit end device in the method embodiments. In addition, the units in the apparatus 1300 and the foregoing other operations and/or functions are separately used to implement corresponding procedures in the method embodiments of the transmit end device in the method embodiments.

When the apparatus 1300 is configured to perform the method in FIG. 6, the transceiver unit 1310 may be configured to perform receiving and sending steps in the method, for example, steps S611, S610, S630, S631, S622, and S632; and the processing unit 1320 may be configured to perform a processing step in the method, for example, steps S621 and S623.

When the apparatus 1300 is configured to perform the method in FIG. 8, the transceiver unit 1310 may be configured to perform receiving and sending steps in the method, for example, steps S820, S830, S840, and S850; and the processing unit 1320 may be configured to perform a processing step in the method, for example, step S810.

It should be understood that a specific process in which the units perform the foregoing corresponding steps is described in detail in the foregoing method embodiments, and for brevity, details are not described herein. In addition, beneficial effect brought by performing the foregoing corresponding steps by the units are described in detail in the foregoing method embodiments, and details are not described herein again.

In another design, the apparatus 1300 is configured to perform actions performed by the receive end device in the foregoing method embodiments.

In a possible implementation, the transceiver unit 1310 is configured to receive a first ultra-wideband UWB signal from a transmit end device; and the transceiver unit 1310 is configured to send first indication information to the transmit end device, where the first indication information indicates a first number of fragment signals of a second UWB signal; and the first indication information is determined based on the first UWB signal.

In another possible implementation, the transceiver unit 1310 is configured to receive fourth indication information from a control device, where the fourth indication information indicates a third number of fragment signals of a third UWB signal; and the processing unit 1320 is configured to transmit the third UWB signal based on the third number.

The apparatus 1300 may implement steps or procedures performed by the receive end device in the method embodiments according to embodiments of this application. The apparatus 1300 may include units configured to perform the methods performed by the receive end device in the method embodiments. In addition, the units in the apparatus 1300 and the foregoing other operations and/or functions are separately used to implement corresponding procedures in the method embodiments of the receive end device in the method embodiments.

When the apparatus 1300 is configured to perform the method in FIG. 6, the transceiver unit 1310 may be configured to perform receiving and sending steps in the method, for example, steps S611, S610, S630, S631, S622, and S632; and the processing unit 1320 may be configured to perform a processing step in the method, for example, step S620.

When the apparatus 1300 is configured to perform the method in FIG. 6, the transceiver unit 1310 may be configured to perform receiving and sending steps in the method, for example, a step S850; and the processing unit 1320 may be configured to perform a processing step in the method.

It should be understood that a specific process in which the units perform the foregoing corresponding steps is described in detail in the foregoing method embodiments, and for brevity, details are not described herein. In addition, beneficial effect brought by performing the foregoing corresponding steps by the units are described in detail in the foregoing method embodiments, and details are not described herein again.

In still another design, the apparatus 1300 is configured to perform actions performed by the control device in the foregoing method embodiment.

In a possible implementation, the transceiver unit 1310 is configured to receive third indication information from a transmit end device, where the third indication information indicates a third number of fragment signals of a third UWB signal; and the transceiver unit 1310 is configured to send first information to the transmit end device, where the first information indicates whether it is agreed to change a number of fragment signals of the third UWB signal to the third number; and the third indication information is determined based on at least one fragment signal of a fourth UWB signal.

The apparatus 1300 may implement steps or procedures performed by the control device in the method embodiments according to embodiments of this application. The apparatus 1300 may include units configured to perform the methods performed by the control device in the method embodiments. In addition, the units in the apparatus 1300 and the foregoing other operations and/or functions are separately used to implement corresponding procedures in the method embodiments of the control device in the method embodiments.

When the apparatus 1300 is configured to perform the method in FIG. 8, the transceiver unit 1310 may be configured to perform receiving and sending steps in the method, for example, steps S611, S610, S630, S631, and S632; and the processing unit 1320 may be configured to perform a processing step in the method, for example, step S620.

When the apparatus 1300 is configured to perform the method in FIG. 6, the transceiver unit 1310 may be configured to perform receiving and sending steps in the method, for example, step S820, S830, S840, and S850; and the processing unit 1320 may be configured to perform a processing step in the method.

It should be understood that a specific process in which the units perform the foregoing corresponding steps is described in detail in the foregoing method embodiments, and for brevity, details are not described herein. In addition, beneficial effect brought by performing the foregoing corresponding steps by the units are described in detail in the foregoing method embodiments, and details are not described herein again.

The processing unit 1320 in the foregoing embodiment may be implemented by at least one processor or a processor-related circuit. The transceiver unit 1310 may be implemented by a transceiver or a transceiver-related circuit. The storage unit may be implemented by at least one storage.

As shown in FIG. 14, an embodiment of this application further provides an apparatus 1400. The apparatus 1400 includes a processor 1410, and may further include one or more storages 1420. The processor 1410 is coupled to the storage 1420. The storage 1420 is configured to store a computer program or instructions and/or data. The processor 1410 is configured to execute the computer program or the instructions and/or data stored in the storage 1420, so that the method in the foregoing method embodiment is performed. Optionally, the apparatus 1400 includes one or more processors 1410.

Optionally, the storage 1420 and the processor 1410 may be integrated together, or separately disposed.

Optionally, as shown in FIG. 14, the apparatus 1400 may further include a transceiver 1430. The transceiver 1430 is configured to receive and/or send a signal. For example, the processor 1410 is configured to control the transceiver 1430 to receive a signal and/or send a signal.

In a solution, the apparatus 1400 is configured to implement an operation performed by the transceiver device (for example, the transmit end device and the receive end device) in the foregoing method embodiment.

An embodiment of this application further provides a computer-readable storage medium. The computer-readable storage medium stores computer instructions used to implement the method performed by the transceiver device (for example, the transmit end device and the receive end device) in the foregoing method embodiment.

For example, when the computer program is executed by a computer, the computer can implement the method performed by the transceiver device (for example, the transmit end device and the receive end device) in the foregoing method embodiment.

An embodiment of this application further provides a computer program product including instructions. When the instructions are executed by a computer, the computer is enabled to implement the method performed by the transceiver device (for example, the transmit end device and the receive end device) in the foregoing method embodiment.

An embodiment of this application further provides a communication system. The communication system includes the transmit end device and the receive end device in the foregoing method embodiment.

For explanations and beneficial effect of related content of any one of the apparatuses provided above, refer to the corresponding method embodiments provided above. Details are not described herein again.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It may be understood that the storage in embodiments of this application may be a volatile memory or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the storage (a storage module) may be integrated into the processor.

It should further be noted that the storage described herein is intended to include, but is not limited to, these and any other appropriate type of storage.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signaling transmission method, comprising:

   receiving, by a receive end device, a first ultra-wideband UWB signal from a transmit end device; and
   sending, by the receive end device, first indication information to the transmit end device, wherein the first indication information indicates a first number of fragment signals of a second UWB signal; and
   the first indication information is determined based on the first UWB signal.

2. The method according to claim 1, wherein the first indication information is carried in a first information element, the first information element further comprises a first address size specifier field and/or a first address field, the first address size specifier field indicates an address type of a device that receives the first information element, and the first address field indicates an address of the device that receives the first information element.

3. The method according to claim 1 or 2, wherein the method further comprises:

   determining, by the receive end device based on quality of the first UWB signal, a confidence level corresponding to the first UWB signal; and
   determining, by the receive end device, the first indication information based on the confidence level and a mapping relationship, wherein
   the mapping relationship is a mapping relationship between the confidence level and the first number.

4. The method according to any one of claims 1 to 3, wherein the method further comprises:

   receiving, by the receive end device, first configuration information from the transmit end device, wherein the first configuration information indicates a configuration of the first UWB signal; and/or
   receiving, by the receive end device, second configuration information from the transmit end device, wherein the second configuration information indicates a configuration of the second UWB signal.

5. The method according to any one of claims 1 to 4, wherein the method further comprises:
   receiving, by the receive end device, second indication information from the transmit end device, wherein the second indication information indicates a second number of fragment signals of the second UWB signal, and the second indication information is determined based on the first indication information.

6. The method according to any one of claims 1 to 4, wherein the method further comprises:

   sending, by the receive end device, a fifth UWB signal to the transmit end device; and
   receiving, by the receive end device, second indication information from the transmit end device, wherein the second indication information indicates a fourth number of fragment signals of the second UWB signal; and
   the fourth number of fragment signals of the second UWB signal is determined based on the first indication information and/or the fifth UWB signal.

7. The method according to claim 5 or 6, wherein the second indication information is carried in a second information element, the second information element further comprises a second address size specifier field and/or a second address field, the second address size specifier field indicates an address type of a device that receives the second information element, and the second address field indicates an address of the device that receives the second information element.

8. The method according to any one of claims 5 to 7, wherein the second indication information is carried in a notification message, and the notification message is used to schedule and indicate a sending sequence of the fragment signals of the second UWB signal.

9. The method according to any one of claims 1 to 8, wherein the method further comprises:
   receiving, by the receive end device, a poll signal from the transmit end device, or sending, by the receive end device, a poll signal to the transmit end device, wherein the poll signal indicates a sending sequence of a UWB signal and a narrowband signal that are transmitted in a measurement control phase.

10. A signaling transmission method, comprising:

    sending, by a transmit end device, a first UWB signal to a receive end device, wherein the first UWB signal is used to determine first indication information, and the first indication information indicates a first number of fragment signals of a second UWB signal; and
    receiving, by the transmit end device, the first indication information from the receive end device.

11. The method according to claim 10, wherein the first indication information is carried in a first information element, the first information element further comprises a first address size specifier field and a first address field, the first address size specifier field indicates an address type of a device that receives the first information element, and the first address field indicates an address of the device that receives the first information element.

12. The method according to claim 10 or 11, wherein the method further comprises:

sending, by the transmit end device, first configuration information to the receive end device, wherein the first configuration information indicates a configuration of the first UWB signal; and/or
sending, by the transmit end device, second configuration information to the receive end device, wherein the second configuration information indicates a configuration of the second UWB signal.

13. The method according to any one of claims 10 to 12, wherein the method further comprises:

determining, by the transmit end device, second indication information based on the first indication information, wherein the second indication information indicates a second number of fragment signals of the second UWB signal; and
sending, by the transmit end device, the second indication information to the receive end device.

14. The method according to any one of claims 10 to 13, wherein the method further comprises:

receiving, by the transmit end device, a fifth UWB signal from the receive end device;
determining, by the transmit end device, a fourth number of fragment signals of the second UWB signal based on the first indication information and/or the fifth UWB signal; and
sending, by the transmit end device, second indication information to the receive end device, wherein the second indication information indicates a fourth number of fragment signals of the second UWB signal.

15. The method according to claim 13 or 14, wherein the second indication information is carried in a second information element, the second information element further comprises a second address size specifier field and/or a second address field, the second address size specifier field indicates an address type of a device that receives the second information element, and the second address field indicates an address of the device that receives the second information element.

16. The method according to any one of claims 13 to 15, wherein the second indication information is carried in a notification message, and the notification message is used to schedule and indicate a sending sequence of the fragment signals of the second UWB signal.

17. The method according to any one of claims 10 to 16, wherein the method further comprises:
receiving, by the transmit end device, a poll signal from the receive end device, or sending, by the transmit end device, a poll signal to the receive end device, wherein the poll signal indicates a sending sequence of a UWB signal and a narrowband signal that are transmitted in a measurement control phase.

18. A signaling transmission method, comprising:

sending, by a transmit end device, third indication information to a control device, wherein the third indication information indicates a third number of fragment signals of a third UWB signal; and
receiving, by the transmit end device, first information from the control device, wherein the first information indicates whether it is agreed to change a number of fragment signals of the third UWB signal to the third number; and
the third indication information is determined based on at least one fragment signal of a fourth UWB signal.

19. The method according to claim 18, wherein the method further comprises:
sending, by the transmit end device, second information to the control device, wherein the second information indicates that the number of fragment signals of the third UWB signal is changed.

20. The method according to claim 18 or 19, wherein the third indication information is carried in a third information element, the third information element further comprises a third address size specifier field and/or a third address field, the third address size specifier field indicates an address type of a device that receives the third information element, and the third address field indicates an address of the device that receives the third information element.

21. The method according to any one of claims 18 to 20, wherein the first information indicates to agree to change the number of fragment signals of the third UWB signal to the third number, and the method further comprises:
receiving, by the transmit end device, fourth indication information from the control device, wherein the fourth indication information indicates the third number of fragment signals of the third UWB signal.

22. The method according to claim 21, wherein the fourth indication information is carried in a fourth information element, the fourth information element further comprises a fourth address size specifier field and/or a fourth address field, the fourth address size specifier field indicates an address type of a device that receives the fourth information element, and the fourth address field indicates an address of the device that receives the fourth information element.

23. The method according to claim 21 or 22, wherein the sending, by a transmit end device, third indication information to a control device comprises:

   sending, by the transmit end device, the third indication information to the control device in a measurement report phase of a first round, wherein
   the third UWB signal comprises a UWB signal transmitted in a measurement phase of a second round, and the second round is a measurement round after the first round.

24. The method according to claim 23, wherein the receiving, by the transmit end device, fourth indication information from the control device comprises:

   receiving, by the transmit end device, the fourth indication information from the control device in the measurement report phase of the first round; or
   receiving, by the transmit end device, the fourth indication information from the control device before the measurement phase of the second round.

25. The method according to claim 21 or 22, wherein the sending, by a transmit end device, third indication information to a control device comprises:

   sending, by the transmit end device, the third indication information to the control device at a first moment in a measurement phase of a first round, wherein
   the third UWB signal comprises a UWB signal transmitted in a measurement phase of a second round and/or a UWB signal transmitted after a second moment in the measurement phase of the first round, and the second moment is later than the first moment.

26. The method according to claim 25, wherein the receiving, by the transmit end device, fourth indication information from the control device comprises:

   receiving, by the transmit end device, the fourth indication information from the control device before the measurement phase of the second round; or
   receiving, by the transmit end device, the fourth indication information from the control device at the second moment in the measurement phase of the first round.

27. A signaling transmission apparatus, comprising a module configured to implement the method according to any one of claims 1 to 9.

28. A signaling transmission apparatus, comprising a module configured to implement the method according to any one of claims 10 to 17.

29. A communication system, comprising at least one signaling transmission apparatus according to claim 27 and at least one signaling transmission apparatus according to claim 28.

30. A chip, comprising a processor and an interface, and configured to invoke, from a storage, a computer program stored in the storage, and run the computer program, to perform the method according to any one of claims 1 to 26.

31. A computer-readable storage medium, configured to store a computer program, wherein the computer program comprises instructions for implementing the method according to any one of claims 1 to 26.

32. A signaling transmission apparatus, comprising a processor, configured to execute a computer program stored in a storage, so that the apparatus performs the method according to any one of claims 1 to 9, or so that the apparatus performs the method according to any one of claims 10 to 17.

101

102

PAN coordinator

(A)

● FFD

○ RFD

PAN coordinator

(B)

←→ Communication flow

FIG. 1

UWB fragment
signal #1

UWB fragment
signal #2

UWB fragment
signal #3

1 ms

1 ms

1 ms

...

Time

FIG. 2

Device 1/Device 1

| UWB module | Narrowband communication module |

Device 2/Device 2

| Narrowband communication module | UWB module |

Data transmission

Positioning and/or ranging

FIG. 3

Ranging round

Ranging slot

...

...

...

Ranging control phase

Ranging phase

Ranging report phase

FIG. 4

FIG. 5

| Transmit end device | | Receive end device |
|---|---|---|

S611: First configuration information

S610: First UWB signal

S620: Determine first indication information based on the first UWB signal

S630: First indication information

Manner 1

S621: Determine a second number of fragment signals of a second UWB signal based on the first indication information

S622: Fifth UWB signal

Manner 2

S623: Determine a fourth number of fragment signals of a second UWB signal based on the first indication information and the fifth UWB signal

S631: Second indication information

S632: Second configuration information

FIG. 6

FIG. 7(a)

FIG. 7(b)

FIG. 7(c)

EP 4 529 065 A1

FIG. 7(d)

Initiator device (Control device)

Responder device

: NB signal

: UWB signal

Poll signal

First UWB signal

Response signal

First indication information

Fifth UWB signal

Second indication information

Second narrowband signal

1 ms  1 ms  1 ms  1 ms  1 ms  1 ms

Ranging control phase

Ranging phase

Ranging result report phase

FIG. 7(e)

FIG. 7(f)

○ : NB signal

□ : UWB signal

Initiator device (Control device)

Responder device

Poll signal

Response signal

First UWB signal

Fifth UWB signal

First indication information

Second indication information

Second narrowband signal

Ranging control phase

Ranging phase

Ranging result report phase

1 ms

EP 4 529 065 A1

◯ : NB signal

▭ : UWB signal

Initiator device (Control device)

Poll signal

First UWB signal

Fifth UWB signal

Response signal/ First indication information

Second indication information

Second narrowband signal

1 ms  1 ms  1 ms  1 ms

...

Responder device

Ranging control phase

Ranging phase

Ranging result report phase

FIG. 7(g)

EP 4 529 065 A1

◯ : NB signal

▭ : UWB signal

Initiator device (Control device)

Poll signal

First UWB signal

Response signal #1/First indication information #1

Fifth UWB signal #1

Second indication information

Second narrowband signal

1 ms — 1 ms — 1 ms — 1 ms

Responder device #1

Response signal #2/First indication information #2

Fifth UWB signal #2

Responder device #2

Response signal #3/First indication information #3

Fifth UWB signal #3

Responder device #3

FIG. 7(h)

Transmit end device

Control device

Receive end device

S810: Determine third indication information based on at least one fragment signal of a fourth UWB signal

S820: Third indication information

S830: Second information

S840: First information

S850: Fourth indication information

S850: Fourth indication information

FIG. 8

FIG. 9(a)

FIG. 9(b)

○ : NB signal

□ : UWB signal

Control device

Initiator device

Responder device

Poll signal

Response signal

1 ms

1 ms

1 ms

Second information

Third indication information

First information

Fourth indication information

Fourth indication information

Ranging control phase

Ranging phase

Ranging result report phase

FIG. 10(a)

FIG. 10(b)

EP 4 529 065 A1

FIG. 11(a)

FIG. 11(b)

FIG. 12(a)

Initiator device

Responder device (Control device)

: NB signal

: UWB signal

Poll signal

Response signal

1 ms

Second information

Third indication information

Fourth indication information

Ranging control phase

Ranging phase

Ranging result report phase

FIG. 12(b)

EP 4 529 065 A1

◯ : NB signal

▭ : UWB signal

Initiator
device

Poll
signal

1 ms --- 1 ms --- 1 ms --- 1 ms

Response signal

Responder
device
(Control
device)

Fourth
indication
information

Ranging control phase

Ranging phase

Ranging result
report phase

FIG. 12(c)

FIG. 12(d)

FIG. 12(e)

○ : NB signal

▯ : UWB signal

Transmit end device

Receive end device

1 ms    1 ms    1 ms    1 ms

Change request message

Measurement control phase

Measurement phase

Measurement result report phase

EP 4 529 065 A1

67

FIG. 12(f)

◯ : NB signal

▭ : UWB signal

Transmit
end device

⊢— 1 ms —⊣ ⊢— 1 ms —⊣ ⊢— 1 ms —⊣ ⊢— 1 ms —⊣

...

Change
request
message

...

Receive end
device

Measurement control phase          Measurement phase          Measurement result
report phase

FIG. 12(g)

FIG. 13

FIG. 14

## INTERNATIONAL SEARCH REPORT

| International application No. |
|---|
| **PCT/CN2023/093597** |

**A.    CLASSIFICATION OF SUBJECT MATTER**

H04L5/00(2006.01)i

According to International Patent Classification (IPC) or to both national classification and IPC

**B.    FIELDS SEARCHED**

Minimum documentation searched (classification system followed by classification symbols)

IPC：H04L，H04W

Documentation searched other than minimum documentation to the extent that such documents are included in the fields searched

Electronic data base consulted during the international search (name of data base and, where practicable, search terms used)

3GPP, CNTXT, ENTXTC, WPABSC, CNKI: 部分, 测距, 测量, 测试, 超短脉冲, 超宽带, 超宽频, 短信号, 分段, 分段信号, 分割, 分块, 分片, 个数, 后向, 划分, 拆分, 计数, 可信度, 片段, 前向, 数, 数量, 数目, 探测, 信号, 信噪比, 置信度, 质量, UWB, part+, number+, COUNT+, mount+, segment+

**C.    DOCUMENTS CONSIDERED TO BE RELEVANT**

| Category* | Citation of document, with indication, where appropriate, of the relevant passages | Relevant to claim No. |
|---|---|---|
| X | US 2005058107 A1 (NOKIA CORP.) 17 March 2005 (2005-03-17) <br> description, paragraphs [0036]-[0103], and figures 1-10 | 1-17, 27-32 |
| A | US 2005058107 A1 (NOKIA CORP.) 17 March 2005 (2005-03-17) <br> entire document | 18-26 |
| A | US 2021242901 A1 (APPLE INC.) 05 August 2021 (2021-08-05) <br> entire document | 1-32 |
| A | US 2022141657 A1 (APPLE INC.) 05 May 2022 (2022-05-05) <br> entire document | 1-32 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 September 2023** | **08 September 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/093597** |

| Patent document cited in search report | | | Publication date (day/month/year) | Patent family member(s) | | | Publication date (day/month/year) |
| --- | --- | --- | --- | --- | --- | --- | --- |
| US | 2005058107 | A1 | 17 March 2005 | US | 7499674 | B2 | 03 March 2009 |
| | | | | KR | 20050027022 | A | 17 March 2005 |
| | | | | EP | 1515473 | A2 | 16 March 2005 |
| | | | | EP | 1515473 | A3 | 06 July 2005 |
| US | 2021242901 | A1 | 05 August 2021 | US | 11239881 | B2 | 01 February 2022 |
| | | | | DE | 102021102288 | A1 | 05 August 2021 |
| | | | | US | 2022131568 | A1 | 28 April 2022 |
| US | 2022141657 | A1 | 05 May 2022 | | None | | |

Form PCT/ISA/210 (patent family annex) (July 2022)

**EP 4 529 065 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210637088

- CN 202210783842